(19)

Europäisches
Patentamt
European
Patent Office
Office européen
des brevets

(11)   **EP 2 474 382 B1**

(12)   **EUROPEAN PATENT SPECIFICATION**

(45) Date of publication and mention
of the grant of the patent:
**13.02.2019   Bulletin 2019/07**

(21) Application number: **09848765.5**

(22) Date of filing: **31.08.2009**

(51) Int Cl.:
**B23K 20/12** *(2006.01)*          **B23K 37/02** *(2006.01)*
**B23K 37/04** *(2006.01)*          *B23K 101/18* *(2006.01)*

(86) International application number:
**PCT/JP2009/065221**

(87) International publication number:
**WO 2011/024320 (03.03.2011 Gazette 2011/09)**

(54) **BOTH- SIDE FRICTION STIR BONDING METHOD AND DEVICE FOR METAL PLATE IN COLD ROLLING FACILITY ; CORRESPONDING COLD ROLLING FACILITY**

BEIDSEITIGES RÜHRREIBSCHWEISSVERFAHREN UND -VORRICHTUNG FÜR EINE METALLPLATTE IN EINER KALTWALZANLAGE ; ENTSPRECHENDE KALTWALZANLAGE

PROCÉDÉ ET DISPOSITIF DE LIAISON PAR FRICTION-MALAXAGE SUR LES DEUX FACES D'UNE PLAQUE MÉTALLIQUE DANS UNE INSTALLATION DE LAMINAGE À FROID ; INSTALLATION DE LAMINAGE À FROID CORRESPONDANTE

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**11.07.2012   Bulletin 2012/28**

(73) Proprietor: **Primetals Technologies Japan, Ltd.**
**Tokyo 108-0014 (JP)**

(72) Inventors:
 • **KAGA Shinichi**
  **Tokyo 108-0014 (JP)**
 • **ONOSE Mitsuru**
  **Tokyo 108-0014 (JP)**
 • **TOMINAGA Noriaki**
  **Hiroshima-shi**
  **Hiroshima 733-8553 (JP)**
 • **SAITO Takehiko**
  **Hiroshima-shi**
  **Hiroshima 733-8553 (JP)**
 • **YOSHIMURA Yasutsugu**
  **Tokyo 108-0014 (JP)**

 • **HIRANO Satoshi**
  **Hitachi-shi**
  **Ibaraki 319-1292 (JP)**
 • **PARK Seung Hwan**
  **Hitachi-shi**
  **Ibaraki 319-1292 (JP)**

(74) Representative: **Beetz & Partner mbB**
**Patentanwälte**
**Steinsdorfstraße 10**
**80538 München (DE)**

(56) References cited:
| | |
|---|---|
| JP-A- 11 048 968 | JP-A- 11 090 654 |
| JP-A- 11 267 859 | JP-A- 11 320 127 |
| JP-A- 2000 334 577 | JP-A- 2002 103 061 |
| JP-A- 2002 331 370 | JP-A- 2003 211 326 |
| JP-A- 2005 007 466 | JP-A- 2005 066 643 |
| JP-A- 2008 036 648 | JP-A- 2009 241 771 |
| JP-B2- 3 261 433 | US-A- 5 813 592 |
| US-B1- 6 419 142 | |

**Description**

Technical Field

The present invention relates to a method and an apparatus for joining metal plates together, a metal plates joining method in a cold rolling system, and a cold rolling system. A both-side friction stir welding method and apparatus as described in the preamble portions of patent claims 1 and 14, respectively, have been known from JP 2002-103061 A.

Background Art

Friction stir welding is known as a technique that the surface of a rotary tool shoulder is brought into contact with surfaces of the materials to be joined while the rotary tool is rotated, and the materials are frictionally stirred by utilizing the frictional heat between the shoulder surface and the materials surfaces, so that the materials are welded and joined under a solid-phase state below the melting points. This welding technique is already commercialized primarily for joining aluminum alloys in a variety of industrial fields. Diverse methods are proposed for the welding technique.
The most common type of friction stir welding is one-side friction stir welding described, for example, per Fig. 12 of Patent Document 1 (Japanese Patent No. 2712838) or in Non-Patent Document 1. In the one-side friction stir welding method, a rotary tool includes a probe formed at a distal end of the tool body and having a diameter smaller than that of the distal end of the tool body and a shoulder formed around a portion of the distal end of the tool body at which the probe is formed, and the rotary tool is inserted from into a welding portion (e.g., a butting portion) between two metal plates to be joined from one surface side thereof, while the tool is rotated to frictionally stir the welding portion by utilizing the resulting frictional heat thereby to weld the plates.
Both-side friction stir welding is also proposed. In the both-side friction stir welding, two rotary tools are disposed in opposed relationship in the front surface side and the back surface side of a welding portion (e.g., a butting portion) between two metal plates, respectively, and the welding portion is frictionally stirred from the both surface side thereof to join the plates. This is shown in Fig. 14a of Patent Document 1 (Japanese Patent No. 2712838), for example.
Patent Document 2 (Japanese Patent No. 3261433) describes another example of both-side friction stir welding. In this technique, the materials to be joined are hollow or thick materials, and rotary tools are disposed in opposed relationship in one surface side and the other surface side of the materials, respectively, and support rollers are provided to support the pressing force imparted from one surface side to the other surface side by the rotary tool and the pressing force in the one surface side is made greater than the rotary tool pressing force in the other surface side, and the materials to be joined are moved to perform friction stir welding from the front and back surface sides.

Prior Art Literature

(Patent Documents)

Patent Document 1: JP No. 2712838
Patent Document 2: JP No. 3261433
Patent Document 3: JP 2002-103061 A

(Non-Patent Documents)

Non-Patent Document 1: "Friction stir welding - All of Friction stir welding", pp. 12 to 16, compiled by the Japan Welding Society and published by Sanpo Publications Incorporated.

Summary of the Invention

(Problems to be Solved by the Invention)

The one-side friction stir welding methods described in Patent Document 1 and Non-Patent Document 1 have several problems.
Firstly, thermal efficiency is low and a welding speed is limited by an increase in load per rotary tool.
In general, as the thickness of the materials to be joined increases, stirring depth during friction stir welding will increase and the amount of heat input will be correspondingly increased. Additionally, since the heat that has been applied to the materials in the friction stir welding will be diffused into a backing plate that retains the pressing force of the rotary tool, the temperature of the welding portion will decrease, which will in turn require input of the extra amount of heat that is equivalent to the amount of diffused heat. In this context, friction stir welding is inferior in thermal efficiency.

Furthermore, to obtain desired friction stirring heat, the pressing force and thermal load per rotary tool both need to be increased, which makes rotary tool life shorter.

Besides, applying the desired amount of heat to the welding portion with one rotary tool requires suppressing the upper limit of the welding speed to a low level, which becomes a significant restriction for enhancing production efficiency.

Secondly, there is a bonding problem.

In the one-side friction stir welding, when the materials to be joined are too thin, the distance between the shoulder surface of the tool and the backing plate tends to become short and the welding portion under a hot state is pressed against the backing plate, so that bonding may occur on the contact surface between the material and the backing plate. Accordingly, butt welding of the materials that are nearly 1 mm thick have been difficult to bring into practical use.

Thirdly, there is a problem of asymmetrical residual stresses.

In case of the one-side friction stir welding, since heat input takes place only from one side on which friction stirring work is conducted, a difference in residual stress between the surface and reverse of the materials occurs, thus warping the materials to be joined.

The above problems associated with one-side friction stir welding can be solved or alleviated by using the both-side friction stir welding method described in Patent Document 1 or 2. It has been found, however, that several other problems must be further solved before conventional both-side friction stir welding can be placed in practical use.

A first problem to be solved is the rupture of the metal plates due to the frictional heat.

In the both-side friction stir welding, when the upper and lower rotary tools are rotated while holding the metal plates from both-sides thereof, a shearing force due to the resulting frictional force will develop on the portions of the metal plates that are sandwiched between the shoulders of the tools. The metal plates will rupture if the shearing force exceeds an allowable shearing force of the materials.

The allowable shearing force of the materials (metal plates) to perform friction stir welding varies according to plate thickness. This shearing force decreases with decreases in plate thickness.

Experiments by the present inventors and the like indicate that materials, especially, metal plates, easily become ruptured at plate thickness below 3 mm.

A second problem is the likelihood of defective welding.

According to Patent Document 2, for friction stir welding of two hollow or thick materials, two rotary tools in which one is provide on one side surface of the plates and the other one is provided on the other side of the plates are arranged in opposed relationship, and support rollers are provided to support the downward pressing force applied from one side to the other side by the upper rotary tool. The pressing force upon one side is increased above the upward pressing force applied by the lower rotary tool on the other side. Next, the materials to be joined are moved to perform friction stir welding in both-sides (front and back surfaces). In this case, the positions of the metal plates are retained by the pressing force of one rotary tool from one side and the repulsion of the support rollers, only the frictional force between the support rollers and the metal plates serve as a constraining force orthogonal to the welding direction.

Thus, an exclusion force during probe passing generated during friction stir welding moves the metal plates in the direction perpendicular to the welding direction of the rotary tools, so that accuracy of clearance of the butting surfaces is not likely to be obtainable and defective welding may occur.

This tendency has been particularly remarkable for metal plates thinner than the diameters of the shoulders of the rotary tools, since these metal plates are less rigid.

In the both-side friction stir welding described in Patent Documents 1 and 2, two rotary tools are arranged in opposed relationship in the front surface side and in the back surface side of a butting portion between the metal plates in such a manner as to impart substantially no clearance between the distal ends of probes, and in this condition, the friction stir welding is carried out. In the both-side friction stir welding without a clearance, even a slight change in the thicknesses of the metal plates changes the pressure exerted upon the contact surfaces between the shoulder surfaces and the metal plate surfaces. Such a change in the surface pressure has changed the amount of frictional heat, deteriorating the welding portion in quality.

A third problem relates to tool life and to economy.

In the both-side friction stir welding, an insertion depth of the rotary tool probe is half the thickness of the metal plate. The insertion depth of the probe is increased with an increase in the thickness of a metal plate, so that the probe diameter has to be increased in order to prevent the probe from being damaged or broken by a moment acting upon the inserted probe. Additionally, the diameter of the shoulder has to be increased in order to obtain the amount of frictional heat that does not cause defective welding.

Increasing the diameters of the probe and shoulder increases the friction stir welding load, so that upsizing of the apparatus is required, thereby making the apparatus inferior in economy.

Furthermore, the welding speed is limited depending on the insertion depth of the probe and thus there is a limit to the reduction in cycle time, and further there is also a limit to the reduction in thermal load of the rotary tool, thereby posing a limit to improving tool life.

Moreover, when the thickness of the metal plate differs, a need arises to correspondingly change the probe length as well, so that a number of rotary tools each having different probe length have to be prepared for metal plates of different thicknesses, thereby making the apparatus inferior in economy.

JP 2002-103061 A discloses a both-side friction stir welding method and apparatus for joining two metal plates together, in which upper and lower rotary tools each including a tool body, a probe formed at a distal end of the tool body and having a diameter smaller than that of the distal end of the tool body and a shoulder formed around a portion of the distal end of the tool body at which the probe is formed are inserted into a butting or lapping portion formed as a welding portion between the two metal plates, from a front surface side and a back surface side of the butting portion, respectively, while the upper and lower rotary tools are rotated to frictionally stir the butting portion by utilizing frictional heat generated by the rotation of the tools thereby to weld the two metal plates.

The object of the present invention is to provide a method and apparatus for joining metal plates together, a metal strips joining method in cold rolling system, and a cold rolling system, in which, when metal plates each having a thickness smaller than a diameter of each of shoulders of rotary tools are joined by both-side friction stir welding, rupture and defective welding of the metal plates are suppressed, welding strength is enhanced, and reliability of the welding strength is improved, while the tool life is prolonged and the rotary tool economy is improved.

(Means for Solving the Problems)

This object is accomplished, according to the present invention, with a method and an apparatus having the features of patent claims 1 and 14, respectively.

Dependent claims are directed on features of preferred embodiments of the present invention.

Brief Description of the Drawings

Fig. 1 is a schematic front view of a both-side friction stir welding apparatus for joining the metal plates together according to an embodiment of the present invention.

Fig. 2 is a schematic perspective view of the both-side friction stir welding apparatus shown in Fig. 1.

Fig. 3 is a schematic side view showing an upper section of the both-side friction stir welding apparatus shown in Fig. 1.

Fig. 4 shows a both-side friction stir welding apparatus for joining metal plates together according to another embodiment of the present invention, and a view showing a scheme that mechanically aligns axes of the upper and lower rotary tools.

Fig. 5 is an enlarged view showing an example of a distal end of a rotary tool.

Fig. 6 is an enlarged view showing another example of a distal end of the rotary tools.

Fig. 7 shows a state during welding when the joining method according to the present invention is applied to butt welding of two metal plates, and also shows positional relationships between the upper and lower rotary tools and the inlet and outlet gripping devices (i.e., a distance between the inlet and outlet gripping devices).

Fig. 8 shows a state during welding when the joining method according to the present invention is applied to butt welding of two metal plates, and also shows a positional relationship between probes of the upper and lower rotary tools during welding (i.e., a distance between the probes).

Fig. 9 is an explanatory view of the welding theory of both-side friction stir welding of butted metal plates according to the embodiment of the present invention, the view showing a state in which an unstirred surface exists.

Fig. 10 is another explanatory view of the welding theory of both-side friction stir welding of butted metal plates according to the embodiment of the present invention, the view showing a state in which the unstirred surface is stretched and inclined.

Fig. 11 is yet another explanatory view of welding theory of both-side friction stir welding of butted metal plates according to the embodiment of the present invention, the view showing a state in which a new surface is created as a result of the unstirred surface being stretched and inclined.

Fig. 12 is a further explanatory view of welding theory of both-side friction stir welding of butted metal plates according to the embodiment of the present invention, the view showing a state in which a vertical pressing force F1 from the upper and lower rotary tools and a horizontal reaction force F2 due to a deformation force by thermal expansion upon the inlet and outlet gripping devices are applied to the unstirred new surface.

Fig. 13 shows a state during welding when the joining method according to the present invention is applied to lap welding of two metal plates.

Fig. 14 shows an operation principle during welding when the joining method according to the present invention is applied to lap welding of two metal plates.

Fig. 15 shows a gripping system when the joining method of the present invention is applied to lap welding of two metal plates.

Fig. 16 shows another gripping system when the joining method of the present invention is applied to lap welding of two metal plates.

Fig. 17 shows simulatively a cross section of a welding surface boundary portion having no un-welded region.

Fig. 18 shows simulatively a cross section of welding surface boundary portion having an un-welded region.

Fig. 19 shows a relationship between an un-welded surface ratio $\alpha$ and cross-sectional modulus ratio $\gamma$ in numerical expression (4) representing the cross-sectional modulus ratio $\gamma$ in the case in which the welding surface boundary portion has no un-welded region and in the case in which the welding surface boundary portion has an un-welded region.

Fig. 20 is a perspective view showing friction stir welding under conditions that the upper and lower rotary tools are rotated in the same direction, that the shoulders of the rotary tools are of the same diameter, and that the axes of the rotary tools are inclined at the same angle with respect to the traveling direction of the tool.

Fig. 21 is a sectional view showing friction stir welding under conditions that the upper and lower rotary tools are rotated in the same direction, that the shoulders of the rotary tools are of the same diameter, and that the axes of the rotary tools are inclined at the same angle with respect to the traveling direction of the tool.

Fig. 22 a perspective view showing friction stir welding under conditions that the upper and lower rotary tools are rotated in opposite directions, that the shoulders of the rotary tools are of the same diameter, and that the axes of the rotary tools are inclined at the same angle with respect to the traveling direction of the tool.

Fig. 23 is a sectional view showing friction stir welding under conditions that the upper and lower rotary tools are rotated in opposite directions, that the shoulders of the rotary tools are of the same diameter, and that the axes of the rotary tools are inclined at the same angle with respect to the traveling direction of the tool.

Fig. 24 is a sectional view taken in the direction of welding during friction stir welding while the rotary tools are rotated.

Fig. 25 is an explanatory view showing the case in which the upper and lower rotary tools are inserted from an edge surface of the welding portion under the condition that the inclination angle of the upper and lower rotary tools are set to 0 degrees (or the tools are not inclined).

Fig. 26 shows the state in which the upper and lower rotary tools are inserted from the edge surface of the welding portion under the condition that the upper and lower rotary tools are appropriately inclined.

Fig. 27 shows the operating method for performing the both-side friction stir welding with plunging-less while the axes 14 of the rotary tools are inclined.

Fig. 28 is a control flow of procedure of a process performed by the control device.

Fig. 29 is a control flow showing another example of procedures if a process performed by the control device.

Fig. 30 shows relationships between an advancing side and retreating side and a rotational direction of a friction stirring tool.

Fig. 31 shows methods in which metal plates 1 and 2 of different thicknesses or a stepped welding portion is frictionally stirred in both-sides.

Fig. 32 shows methods in which metal plates 1 and 2 of different thicknesses or a stepped welding portion is frictionally stirred in both-sides.

Fig. 33 shows an entire system in the case in which the both-side friction stir welding apparatus of the present invention is applied to the cold rolling system that performs one-way continuous cold rolling described in International Patent Publication WO2008/062506.

Fig. 34 shows an entire system in the case in which the both-side friction stir welding apparatus of the present invention is applied to the reversible cold rolling system.

Mode for Carrying Out the Invention

Embodiments of the present invention are described below referring to the accompanying drawings. In the description, the metal plates subjected to cold rolling are taken as an example of the materials to be joined in each embodiment.

(Apparatus)

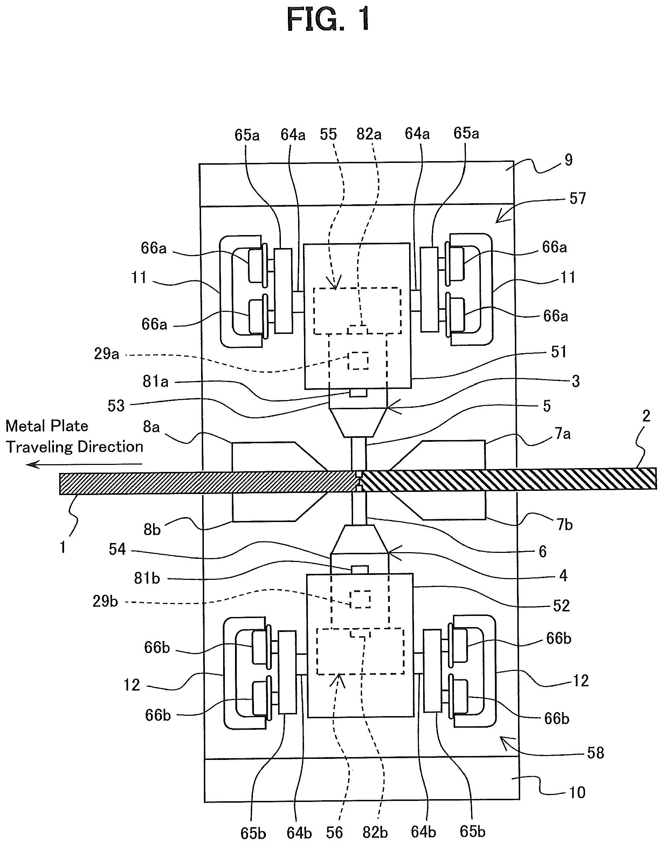

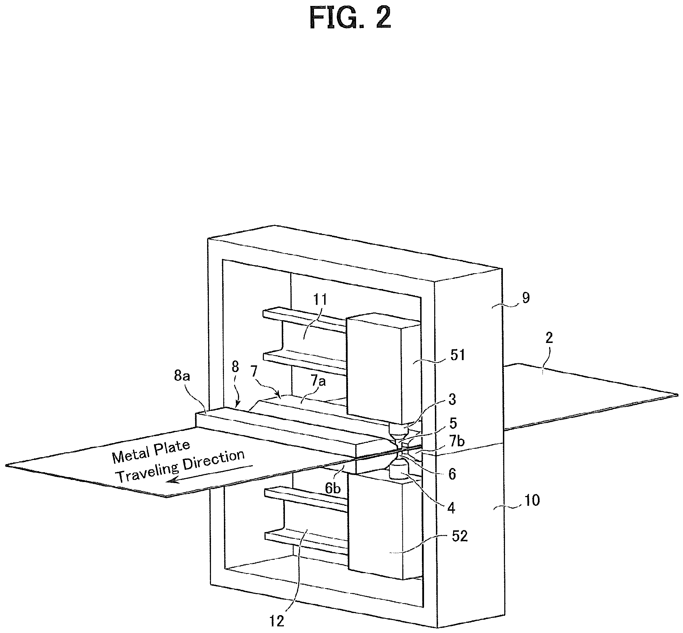

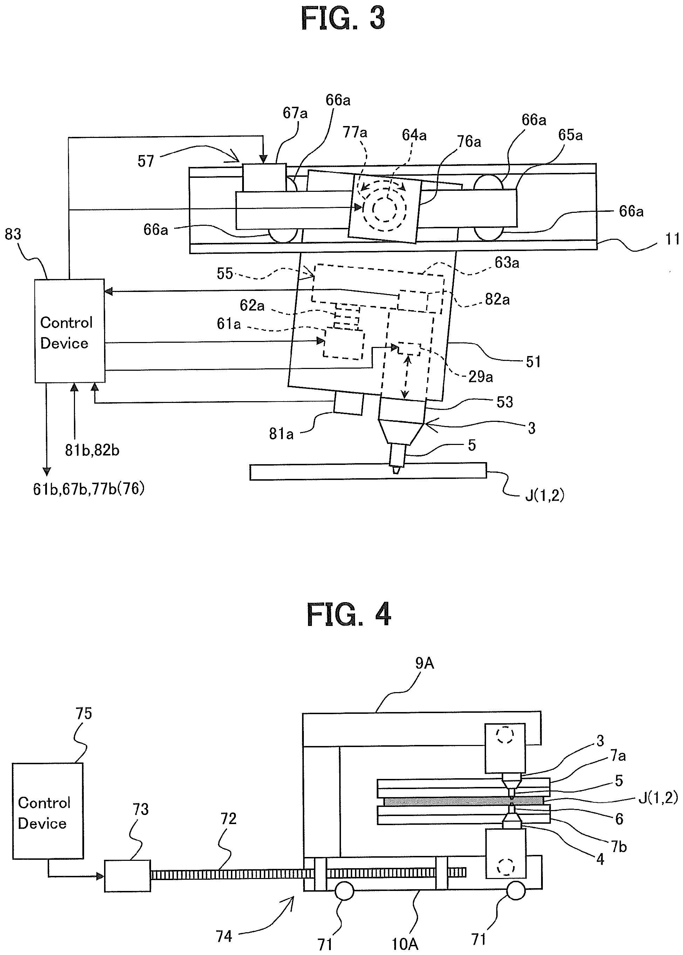

Fig. 1 is a schematic front view of a both-side friction stir welding apparatus for joining the metal plates together according to a first embodiment of the present invention, and Fig. 2 is a schematic perspective view of the both-side friction stir welding apparatus, and Fig. 3 is a schematic side view showing an upper section of the both-side friction stir welding apparatus.

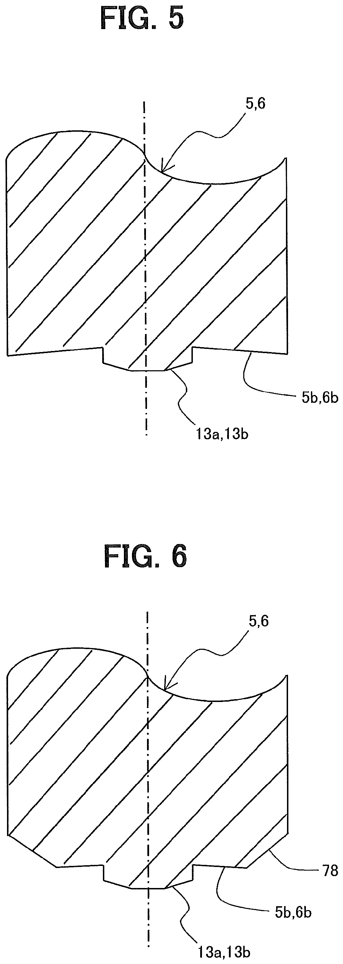

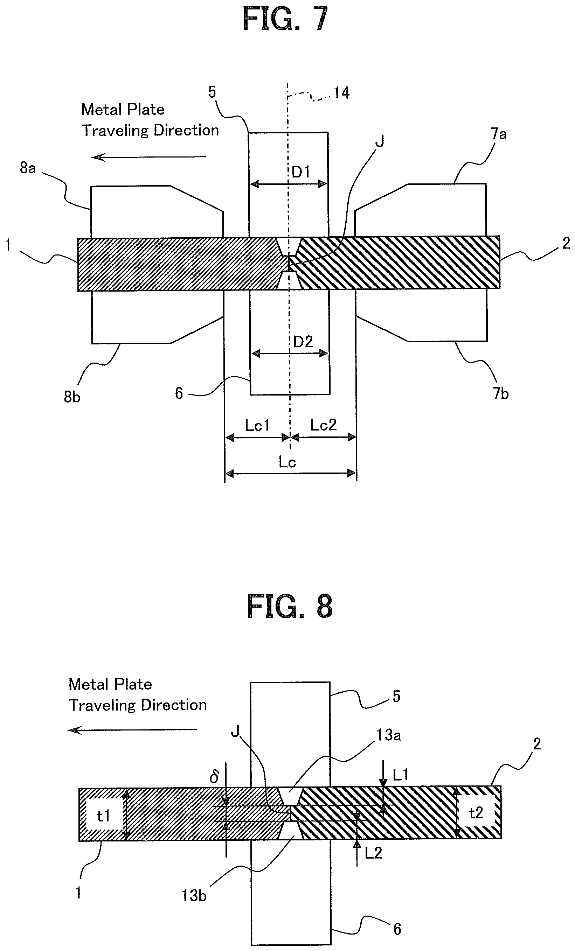

In Figs. 1 to 3, the both-side friction stir welding apparatus according to the present embodiment (where necessary, this apparatus may be hereinafter referred to simply as the joining apparatus) comprises an inlet gripping device 7 (first gripping device) and outlet gripping device 8 (second gripping device) for gripping front and back surfaces of the two metal plates 1 and 2; an upper friction stirring device 3 disposed in the front surface side of a welding portion J of the metal plates 1 and 2 and having an upper rotary tool 5; a lower friction stirring device 4 disposed in opposed relationship to the upper friction stirring device 3 in the back surface side of the welding portion J and having a lower rotary tool 6; upper and lower pressing and clearance adjusting devices 55 and 56 for moving the rotary tools 5 and 6 of the upper and lower friction stirring devices 3 and 4 in a direction in which the rotary tools 5 and 6 approach to each other, and imparting a predetermined clearance δ (see Fig. 8) between distal ends of the probes 13a and 13b of the upper and lower rotary tools 5 and 6 while pressing shoulders 5b and 6b (see Figs. 5 and 6) of the rotary tools 5 and 6 against the front and back surface sides of the welding portion J; and an upper moving device 57 and a lower moving device 58 for moving the upper and lower rotary tools 5 and 6 of the upper and lower friction stirring devices 3 and 4 along the welding portion J in a direction orthogonal to a traveling direction of the metal plates 1 and 2.

The inlet gripping device 7 and the outlet gripping device 8 have upper and lower gripping plates 7a, 7b and 8a, 8b, respectively, the upper and lower gripping plates 7a, 7b and 8a, 8b being provided integrally with upper and lower housings 9 and 10, respectively, and being openable/closable by an opening/closing mechanism including a driving device not shown. Oblique flanks are formed at respective edges of the upper and lower gripping plates 7a, 7b and 8a, 8b on each side facing the welding portion J.

The upper friction stirring device 3 and the lower friction stirring device 4 each include an upper cylindrical body 53 or a lower cylindrical body 54, respectively, to retain the rotary tool 5 or 6, the cylindrical bodies 53 and 54 being encased at least partially in an upper body casing 51 and a lower body casing 52, respectively. The cylindrical bodies 53, 54 contain an upper rotation motor 29a and a lower rotation motor 29b, and these motors rotationally drive the rotary tools 5, 6, respectively.

As shown in Fig. 3, the upper pressing and clearance adjusting device 55 includes a pressing motor 61a provided in the upper body casing 51, a screw 62a rotationally driven by the pressing motor 61a, and a support frame 63a that moves linearly in an axial direction of the screw 62a by rotation of the screw 62a. The cylindrical body 53 of the upper friction stirring device 3 is connected to the support frame 63a so as to move linearly in the axial direction of the screw 62a together with the support frame 63a.

The lower pressing and clearance adjusting device 56, although not shown so, is of construction similar to that of the upper pressing and clearance adjusting device 55. Reference numbers that denote elements of the lower pressing and clearance adjusting device 56 that are equivalent to those of the upper pressing and clearance adjusting device 55 are each assigned a suffix "b", instead of the suffix "a", in the following description.

The upper moving device 57 includes left and right upper rails 11 and 11 both fixed to the upper housing 9; left and right traveling frames 65a and 65a that support the upper body casing 51 via axles 64a and 64b, respectively; left/right and front/rear wheels 66a and 66a provided on the left and right traveling frames 65a, 65a in order to travel on the upper rails 11, 11; and traveling motors 67a and 67a mounted on the left and right traveling frames 65a, 65a in order to drive one of the front and rear wheels 66a, 66a. The upper friction stirring device 3 travels on the upper rails 11, 11 orthogonally to a traveling direction of the metal plates 1 and 2, along the welding portion J.

The lower moving device 58 is also of similar construction, in which the lower friction stirring device 4 travels on the lower rails 12, 12 fixed to the lower housing 10, orthogonally to the traveling direction of the metal plates 1, 2, along the welding portion J. Reference numbers that denote elements of the lower moving device 58 that are equivalent to those of the upper moving device 57 are each assigned a suffix "b", instead of the suffix "a", in the following description.

In the construction shown in Figs. 1 to 3, when the upper and lower friction stirring devices 3 and 4 travel on the upper and lower rails 11, 11 and 12, 12, respectively, simultaneous axial alignment between the upper rotary tool 5 and lower rotary tool 6 uses an electrical control scheme in which a control device 83 (described later) conducts synchronous control upon the traveling motors 67a, 67a of the upper moving device 57 and the traveling motors 67b, 67b of the lower moving device 58.

Fig. 4 shows a scheme that mechanically aligns axes of the upper and lower rotary tools 5 and 6. The upper and lower friction stirring devices 3 and 4 are fixed to the upper and lower housings 9A and 10A integrally coupled to each other to form a C-shaped structure. A traveling device 74 that includes wheels 71, a screw 72, and a traveling motor 73 is provided on the C-shaped structure. The wheels 71 are provided on the lower housing 10A, the screw 72 engages with the lower housing 10A, and the traveling motor 73 rotationally drives the screw 72. Upon the driving motor 73 being driven by a command sent from a control device 75, the screw 72 rotates and the upper and lower housings 9A and 10A travel in the direction orthogonal to the traveling direction of the metal plates 1 and 2, with the upper and lower rotary tools 5 and 6 axially aligned at the same time.

Referring back to Fig. 3, the joining apparatus according to the present embodiment further comprises an upper inclining support device 76a and a lower inclining support device 76b for supporting the upper and lower rotary tools 5 and 6 of the upper and lower friction stirring devices 3 and 4 such that the axes 14 of the upper and lower rotary tools 5 and 6 are inclined in a direction in which the respective probes 13a and 13b move ahead of the other portions of the rotary tools 5 and 6 with respect to a traveling direction of the rotary tools 5 and 6. The upper and lower inclining support devices 76a, 76b are of an angle controllable type, provided on one of the left and right traveling frame pairs 65a, 65a and 65b, 65b, and have angle control motors 77a and 77b that rotationally drive the axles 64a, 64b supported by the left and right traveling frames 65a, 65b. The inclining support devices 76a, 76b may be of a fixed support type that fixedly supports the axes of the upper and lower rotary tools 5, 6 in inclined form.

A control system equipped in the joining apparatus of the present embodiment will be described later herein.

(Rotary tools)

Fig. 5 is an enlarged view showing an example of a distal end of the rotary tools 5 and 6. The rotary tools 5 and 6 include respectively cylindrical tool bodies 5a and 6a, and probes 13a and 13b formed at distal ends of the tool bodies 5a and 6a. The probes 13a and 13b each have a diameter smaller than a diameter of each of the distal ends of the tool bodies 5a and 6a, and the shoulders 5b and 6b are formed around respective portions of the distal ends of the tool bodies 5a and 6a at which the probes 13a and 13b are formed.

In the example of Fig. 5, the shoulders 5b and 6b are each positioned at an entire end-surface of the tool bodies 5a and 6a, with a central portion constructed in the form of a slightly recessed conical surface. Each of the shoulders 5b and 6b in this example is of the same diameter of the tool bodies 5a and 6a.

Fig. 6 is an enlarged view showing another example of a distal end of the rotary tools 5 and 6. In this example, an inclined portion 78 is formed at the respective distal ends of the tool bodies 5a and 6a, and the shoulders 5b and 6b are each formed at an end-surface of the inclined portion 78. The shoulders 5b and 6b in this example each have a diameter smaller than that of the tool bodies 5a and 6a.

(Joining method)

Next, a both-side friction stir welding method for frictionally stirring and welding metal plates according to an embodiment of the present invention that uses the above-described joining apparatus is explained below using Figs. 7 to 33 (where necessary, this method may be hereinafter referred to simply as the joining method).

Fig. 7 shows a state during welding when the joining method according to the present invention is applied to butt welding of two metal plates, and also shows positional relationships between the upper and lower rotary tools and the inlet and outlet gripping devices (i.e., a distance between the inlet and outlet gripping devices). Fig. 8 shows a positional relationship between probes of the upper and lower rotary tools during welding (i.e., a distance between the probes).

As shown in Figs. 7 and 8, when the metal plates 1 and 2 are subjected to butt welding by the both-side friction stir welding, the upper and lower rotary tools 5 and 6 are inserted into a welding portion J (a butting portion) of the metal plates 1 and 2, from a front surface side and a back surface side of the welding portion J, respectively, while the tools 5 and 6 are rotated to frictionally stir the welding portion J by utilizing frictional heat generated by the rotation of the tools 5 and 6 thereby to weld the metal plates 1 and 2.

The two metal plates 1 and 2 each have a thickness (e.g., 20 mm or less) that is smaller than a diameter of each of the shoulder 5b and 6b of the rotary tools 5 and 6, and the joining method of the present invention is intended to weld the metal plates 1 and 2 having such a thickness.

In the joining method according to the present embodiment, at first, the inlet gripping device 7 (first gripping device) and outlet gripping device 8 (second gripping device) arranged to sandwich the upper and lower rotary tools 5 and 6 in the opposed sides thereof are actuated to grip the front and back surfaces of the two metal plates 1 and 2. Next, the pressing and clearance adjusting devices 55 and 56 are actuated to move the upper and lower rotary tools 5 and 6 that is disposed in opposed relationship in the front surface side and the back surface side of the butting portion forming the welding portion J between the two metal plates 1 and 2, in a direction in which the upper and lower rotary tools 5 and 6 approach or bring closer to each other and then to impart a predetermined clearance $\delta$ between the distal ends of the probes 13a and 13b of the upper and lower rotary tools 5 and 6. In addition, the upper and lower friction stirring devices 3 and 4 are actuated to rotate in opposite directions the upper and lower rotary tools 5 and 6 disposed in opposed relationship while pressing the shoulders 5b and 6b of the tools 5 and 6 against the front surface side and the back surface side of the butting portion forming the welding portion J to perform friction stirring. At this time, the upper and lower rotary tools 5 and 6 are pressed against the butting portion J (welding portion) of the two metal plates 1 and 2 from the front surface side and the back surface side thereof, respectively, so as to apply the same pressing forces to the front surface side and the back surface side. Under this state (i.e., the state in which the predetermined clearance is imparted between the distal ends of the probes 13a and 13b and the shoulders 5b and 6b of the upper and lower rotary tools 5 and 6 are pressed against the front surface side and the back surface side of the butting portion J), the moving devices 57 and 58 are actuated to move the upper and lower rotary tools 5 and 6 along the butting portion J while rotating the rotary tools 5 and 6 in the direction orthogonal to the traveling direction of the metal plates 1 and 2 thereby to perform the friction stir welding.

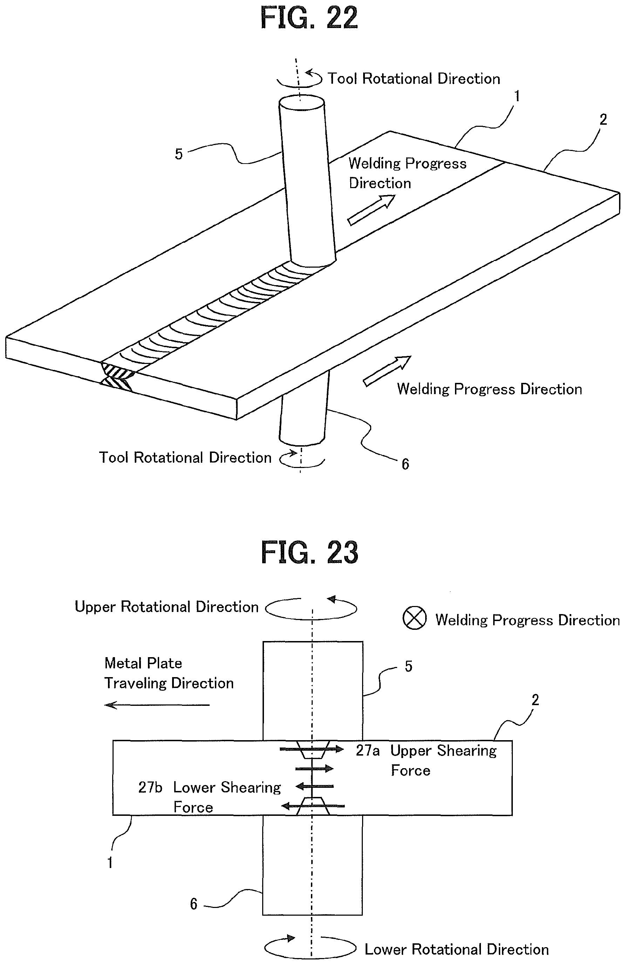

In the joining method according to the present embodiment, the inclining support devices 76a and 76b support the upper and lower rotary tools 5 and 6 such that the axes 14 thereof is inclined in a direction in which the respective probes 13a, 13b move ahead of the other portions of the rotary tools 5 and 6 with respect to the traveling direction of the upper and lower rotary tools 5 and 6, and under this state, the upper and lower rotary tools 5 and 6 are moved while being rotated, in the direction orthogonal to the traveling direction of the metal plates 1 and 2 thereby to perform the friction stir welding (see Figs. 22, 24, 25, and 27).

Operational effectiveness and features of the joining method according to the present embodiment are described in detail below.

(Preventing rupture and defective welding)

In the both-side friction stir welding, when the upper and lower rotary tools are pressed against the metal plates from both front and back surface sides thereof and rotated, a shearing force due to the frictional force develops in the portions of the metal plates that are sandwiched between the shoulders of the tools. The metal plates will rupture if the shearing force exceeds an allowable shearing force of the materials.

The allowable shearing force of the materials (metal plates) to perform friction stir welding varies according to plate thickness and decreases with decreases in plate thickness.

In the present embodiment, the upper and lower rotary tools 5 and 6 are rotated while being pressed against the welding portion J of the metal plates 1 and 2 from the both sides thereof at the same pressing forces with the front and back surfaces of the metal plates 1 and 2 being gripped by the inlet and outlet gripping devices 7 and 8.

When the two metal plates each having a thickness smaller than the diameter of each of the rotary tool shoulders 5b and 6b of the rotary tools 5 and 6 are joined by the both-side friction stir welding, the distance between the inlet and outlet gripping devices 7 and 8 is appropriately set to stay within a range not greater than 5 times the tool diameter depending on the plate thickness and/or a high-temperature deformation resistance value of the material. Additionally, the rotational directions of the upper and lower rotary tools 5 and 6 are set to be opposite to each other in the front surface side and the back surface side.

By pressing the upper and lower rotary tools at the same pressing forces and rotating them in opposite directions in the front and back surface sides, the shearing force due to stirring from the front surface side and the shearing force due to stirring from the back surface side are canceled out within the interior of the welding portion, thereby preventing the metal plates from rupturing and buckling.

The distance between the inlet and outlet gripping devices 7 and 8, and the rotational directions of the upper and lower rotary tools 5 and 6, in the present embodiment, will be described in detail later herein.

In addition, in the conventional both-side friction stir welding, an exclusion force during probe passing generated during friction stir welding moves the metal plates in the direction perpendicular to the welding direction of the rotary tools, so that accuracy of clearance of the butting surfaces is not likely to be obtainable and defective welding may occur. This tendency has been particularly remarkable for metal plates thinner than the diameters of the shoulders of the rotary tools, since these metal plates are less rigid.

In the present embodiment, since the inlet and outlet gripping devices 7 and 8 grip the front and back surfaces of the metal plates 1 and 2, the metal plates is prevented from moving in the direction perpendicular to the welding direction with the exclusion force during probe passing generated during friction stir welding. Therefore, accuracy of clearance of the butting surfaces is ensured and defective welding is preventing from occurring.

Furthermore, in the conventional methods of both-side friction stir welding, two rotary tools are arranged in opposed relationship in the front surface side and in the back surface side of a butting portion between the metal plates in such a manner as to impart substantially no clearance between the distal ends of probes, and in this condition, the friction stir welding is carried out. In the both-side friction stir welding without a clearance, even a slight change in the thicknesses of the metal plates changes the pressure exerted upon the contact surfaces between the shoulder surfaces and the metal plate surfaces. Such a change in the surface pressure has changed the amount of frictional heat, deteriorating the welding portion in quality.

In the present embodiment, by imparting the predetermined clearance $\delta$ between the distal ends of the probes 13a and 13b of the upper and lower tools 5 and 6 disposed in opposed relationship, a change in the pressure exerted upon the contact surfaces between the shoulder surfaces and the metal plate surfaces due to a slight change in the thicknesses of the metal plates is avoided, so that a change in the amount of frictional heat is suppressed, thereby preventing deterioration of the welding portion in quality (defective welding).

By suppressing the rupture and defective welding of the metal plates 1 and 2 as explained in the above, welding strength is enhanced, and reliability of the welding strength is improved.

(Improving tool life and economy)

In the both-side friction stir welding, an insertion depth of the rotary tool probe is half the thickness of the metal plate. In the conventional one-side friction stir welding, the insertion depth of the probe is increased with an increase in the thickness of a metal plate, so that the probe diameter has to be increased in order to prevent the probe from being damaged or broken by a moment acting upon the inserted probe. Additionally, the diameter of the shoulder has to be increased in order to obtain the amount of frictional heat that does not cause defective welding.

Increasing the diameters of the probe and shoulder increases the friction stir welding load, so that upsizing of the apparatus is required, thereby making the apparatus inferior in economy.

Furthermore, the welding speed is limited depending on the insertion depth of the probe and thus there is a limit to the reduction in cycle time, and further there is also a limit to the reduction in thermal load of the rotary tool, thereby posing a limit to improving tool life.

Moreover, when the thickness of the metal plate differs, a need arises to correspondingly change the probe length as well, so that a number of rotary tools each having different probe length have to be prepared for metal plates of different thicknesses, thereby making the apparatus inferior in economy.

In the present embodiment, by imparting the predetermined clearance $\delta$ between the distal ends of the probes 13a and 13b of the rotary tools 5 and 6 disposed in opposed relationship, the amount of insertion of the probes 13a and 13b into the metal plates 1 and 2 is reduced below half the thickness of the metal plate, so that the probes 13a and 13b of the rotary tools 5 and 6 are correspondingly reduced in length, which in turn reduces the moment acting upon the probes 13a and 13b. This makes it unnecessary to increase the probe diameter in order to prevent the probes 13a and 13b from being damaged or broken, and hence unnecessary to increase the diameters of the shoulders 5b and 6b. Therefore, increase in load during friction stir welding is suppressed, and thus the apparatus is miniaturized and economy is improved. Additionally, since the insertion depth of the probes 13a and 13b is small, the welding speed increases and thus the cycle time decreases. Furthermore, since the amount of heat input to the rotary tools 5 and 6 is reduced, tool life is prolonged.

Moreover, since the predetermined clearance $\delta$ is imparted between the distal ends of the probes 13a and 13b, even when metal plates 1 and 2 of different thicknesses are to be joined, rotary tools with a probe of one kind of length can suit the purpose, within a length range equivalent to the clearance, so that by preparing rotary tools of the probe length matching desired welding strengths, running cost is suppressed and thus economy is improved.

(Principles of welding: Friction stir welding combined with solid-phase welding of an unstirred region)

As described above, conventionally, friction sir welding was carried out without imparting a clearance between the probe distal ends of two rotary tools. This is because it was considered that when a clearance is imparted between the probe distal ends, an unstirred surface is generated at a portion of the welding surface boundary of the two metal plates and this reduces welding strength. Contrary to such a conventional concept, the present inventors obtained knowledge that when the front and back surfaces of the two metal plates are gripped by the gripping devices, even if a predetermined clearance is imparted between the probe distal ends, strong welding is obtained even at the unstirred surface, and thus overall necessary welding strength can be secured.

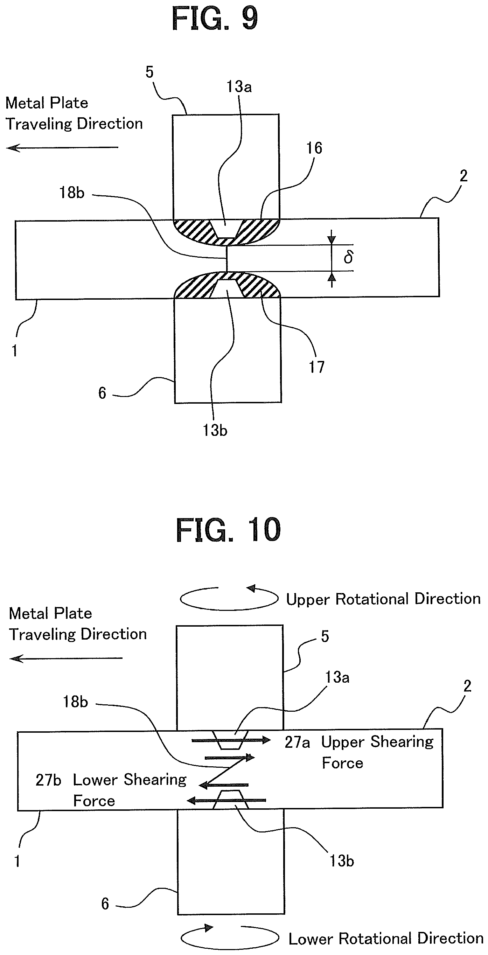

This knowledge is described in detail below using Figs. 9 to 12.

The present inventors elucidated a welding theory of both-side friction stir welding of butted metal plates 1 and 2 .

At first, in the both-side friction stir welding of the butted metal plates 1 and 2, as shown in Fig. 8, a friction stir welding is carried out from the both sides of the front and back surfaces of the metal plates under the state in which a predetermined clearance $\delta$ is imparted between the distal ends of the probes 13a and 13b of the upper and lower rotary tools 5 and 6.

As shown in Fig. 9, in the butting surfaces with the probes 13a and 13b inserted thereinto, portions thereof corresponding to the amount of insertion of the probes 13a and 13b become upper and lower friction stir welding ranges 16 and 17, and a portion corresponding to the predetermined clearance $\delta$ imparted between the distal ends of the probes 13a and 13b becomes a substantially unstirred surface 18b.

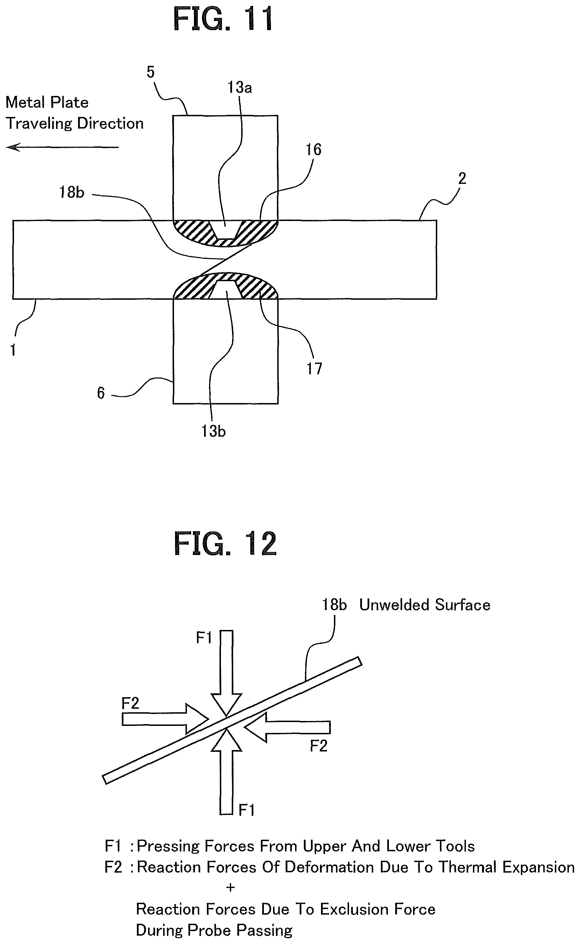

As shown in Figs. 10 and 11, when the rotary tools 5 and 6 in the front and back surfaces of the metal plates are rotated in opposite directions, the unstirred surfaces 18b are elongated and, at the same time, inclined by upper and lower shearing forces 27a and 27b generated by friction stir welding. As the unstirred surfaces 18b are elongated, oxides lying in the surfaces are strongly stretched and destroyed, thereby creating a new surface in the unstirred surfaces 18b.

Additionally, it was confirmed that as shown in Fig. 12, the inclined new surface 18 with the materials softened by frictional heat are applied with vertical pressing forces F1 from the upper and lower rotary tools 5 and 6 and horizontal reaction forces F2 including a reaction of a deformation force due to thermal expansion and a reaction of the exclusion force during probe passing that are generated by constraining the metal plates in the vicinity of the shoulders 5b and 6b of the upper and lower rotary tools 5 and 6 with the inlet and outlet gripping devices 7 and 8, so that the unstirred new surfaces 18 are welded under a solid-phase state as welding interface.

Consequently, the butting surfaces between the butted metal plates 1 and 2 are joined by the conventional solid-phase welding in the friction stir welding ranges 16, 17 and the solid-phase welding of the unstirred new surfaces 18 in the portion corresponding to the predetermined clearance $\delta$ by the vertical pressing forces F1 and the horizontal reaction forces F2, so that not only the stirred region but also the unstirred region can contribute to the strength of the welding portion, thereby enabling high tensile strength and high bending strength to be obtained.

(Application to lap welding)

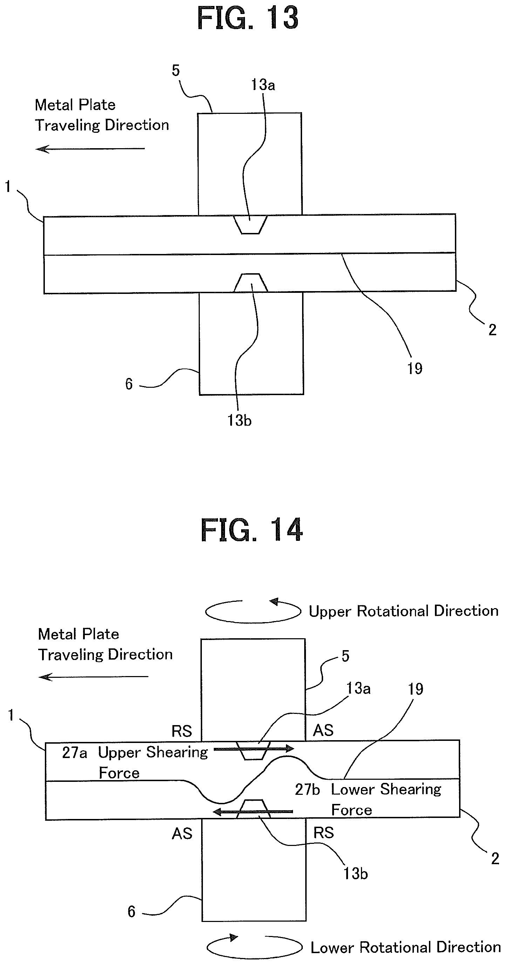

Fig. 13 shows a state during welding when the joining method according to the present invention is applied to lap welding of two metal plates, and Fig. 14 shows the operation principle thereof.

Similarly to the both-side friction stir welding of the butted metal plates, in the both-side friction stir welding of lapped metal plates 1 and 2, as shown in Fig. 13, a friction stir welding is carried out from the both sides of the front and back surfaces of the metal plates under the state in which a predetermined clearance $\delta$ is imparted between the distal ends of the probes 13a and 13b of the upper and lower rotary tools 5 and 6.

As shown in Fig. 14, due to shearing forces 27a and 27b generated by friction stir welding of the lapped metal plates 1 and 2, and a propulsion force running in a welding direction, lapping surfaces between the metal plates 1 and 2 are pulled into towards shoulder surfaces in an advancing side and deformed into an S-shaped curved line form, so that oxides lying in the surfaces are strongly stretched and thus oxide coatings are destroyed, thereby creating a new surface in the lapping surfaces 19.

Additionally, it was confirmed that owing to the vertical pressing forces from the upper and lower rotary tools 5 and 6, and the horizontal reaction force of the deformation force due to thermal expansion and the horizontal reaction force by the exclusion force during probe passing that are produced with the constraints by the inlet and outlet gripping devices 7 and 8, the deformed lapping surfaces (new surfaces) are welded under a solid-phase state as welding boundary with a heat loss minimized by heat input from both front and back surfaces.

The present example applies to a case in which the metal plates 1 and 2 have the same thickness and the probes 13a and 13b of the rotary tools 5 and 6 do not penetrate the lapping surfaces. However, substantially the same advantageous effects can be obtained, even in a case that the metal plates 1 and 2 have different thicknesses and one of the probes 13a and 13b of the rotary tools 5 and 6 penetrates the lapping surfaces.

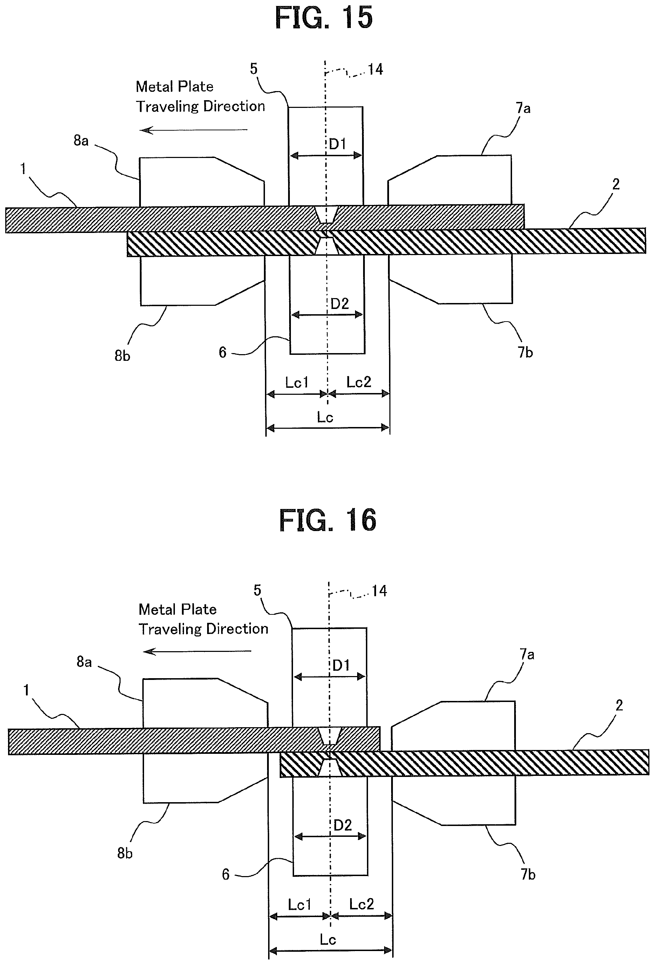

Figs. 15 and 16 show the difference in gripping system when the joining method of the present invention is applied to lap welding of two metal plates.

When the present invention is applied to lap welding, the gripping of the metal plates 1 and 2 by the inlet and outlet gripping devices 7 and 8 comprises two cases in which one is to grip the two lapped metal plates 1 and 2 together and the other is to grip individually the metal plates 1 and 2 respectively.

Fig. 15 shows the former case, in which a lapping portion of the two metal plates is relatively long, and the inlet and outlet gripping devices 7 and 8 grip the metal plates 1 and 2 together in the both sides of the lapping portion forming a welding portion. Fig. 16 shows the latter case, in which the inlet and outlet gripping devices 7 and 8 grips the metal plates 1 and 2 individually in the both sides of the lapping portion forming a welding portion.

In the example of Fig. 16, it is difficult to enhance a degree of intimate contact state in the lapping portion during welding. In addition, since heights at which the inlet and outlet gripping devices 7 and 8 are positioned do not become the same, a height-adjusting mechanism is required. In this sense, the example of Fig. 15 is considered to be preferable.

(Relationship between the gripping devices distance and the tool diameter)

A relationship between the distance between the inlet and outlet gripping devices 7 and 8 and the tool diameter is described below.

When the materials forming the metal plates 1 and 2 are low in stiffness, that is, when thicknesses t1 and t2 of the metal plates are smaller than diameters of the shoulders 5b and 6b of the rotary tools 5 and 6 and thin or when high-temperature deformation resistance values $\sigma 1$ and $\sigma 2$ are small, it is preferable that a distance Lc between the inlet gripping device 7 and the outlet gripping device 8 is set to be not less than 1.5 times, but not greater than 5.0 times the tool body diameter D1 or D2 of the rotary tool 5 or 6, and as shown in Figs. 15 and 16, that the gripping devices grip neighboring portions of the upper and lower rotary tools 5 and 6. Briefly, the inlet and outlet gripping devices 7 and 8 are preferably arranged with respect to the upper and lower rotary tools 5 and 6 so that the following expressions are satisfied:

```
Lc = D1 (D2) x (1.5 to 5.0)
```

$$Lc = Lc1 + Lc2$$

Lc: Distance between the inlet and outlet gripping devices
Lc1: Distance between the rotary tool axis and the inlet gripping device
Lc2: Distance between the rotary tool axis and the outlet gripping device
D1: Tool body diameter of the upper rotary tool
D2: Tool body diameter of the lower rotary tool

In the present invention, the relationship between the gripping devices distance and the tool diameter is defined as above-mentioned for the following reasons.

If the materials forming the metal plates 1 and 2 are low in stiffness, that is, if the plate thicknesses t1 and t2 of the metal plates are small, or if the high-temperature deformation resistance values σ1 and σ2 are small, when friction stir welding is carried out while the metal plates 1 and 2 are gripped by the inlet and outlet gripping devices 7 and 8, it is likely to result in buckling of the metal plates 1 and 2 due to the thermal expansion and thermal deformation by friction heat generated during friction stir welding, the exclusion force during probe passing, and a shearing force of the material generated by the rotation of the shoulders 5b and 6b. After repeating studies on the above problems, the present inventors obtained the following knowledge:
When thicknesses of metal plates (steel plates) are equal to or less than 3 mm, if a gripping devices distance Lc is not greater than 125 mm for a tool diameter D of 25 mm (D=D1=D2), the metal plates were able to be welded without buckling. The gripping devices distance Lc in this case is not greater than 5 times the tool diameter D.

In addition, when thicknesses of metal plates (steel plates) are not greater than 3 mm, in case of the distance Lc of 5 times the tool diameter D (=D1=D2), some of the metal plates suffered buckling and were unable to be welded.

It was confirmed, therefore, that when thicknesses of metal plates (steel plates) are not greater than 3 mm, by setting the distance Lc within a range not greater than 5 times the tool diameter D, appropriately, depending on the plate thickness or high-temperature deformation resistance value of the material, the metal plates can be welded without buckling.

For these reasons, by controlling the distance Lc between the inlet gripping device 7 and the outlet gripping device 8 to be not greater than 5 times the tool diameter D, the metal plates 1 and 2 can be welded without buckling due to the thermal expansion and thermal deformation by frictional heat generated during friction stir welding, the exclusion force during probe passing and the shearing force of the material generated by the rotation of the shoulders 5b and 6b.

Additionally, it is more preferable that when plate thicknesses are not greater than 3 mm, the distance Lc between the inlet gripping device 7 and outlet gripping device 8 is set to be not less than 1.5 times, but not greater than 3 times the tool body diameter D, and even more preferably, set to be not less than 1.5 times, but not greater than 2 times the diameter.

Meanwhile, during friction stirring with the rotary tools 5 and 6, it is unavoidable for the rotary tools 5 and 6 to generate very insignificant vibration due to a change in a load at the welding portion, clearances in movable portions, etc. Additionally, bringing the inlet gripping device 7 and the outlet gripping device 8 too close to the rotary tools 5 and 6 is liable to cause interference (contact) therebetween. By setting the distance Lc between the inlet gripping device 7 and the outlet gripping device 8 to be not less than 1.5 times the tool diameter D, interference between the rotary tools 5 and 6 and the inlet and outlet gripping devices 7 and 8 is preventing from occurring even when the rotary tools 5 and 6 generate very insignificant vibration, thereby improving the apparatus life.

For the above reasons, by setting the distance Lc between the inlet gripping device 7 and outlet gripping device 8 to be not less than 1.5 times, but not greater than 5.0 times the rotary tool diameter and gripping the front and back surfaces of both metal plates 1 and 2 in the vicinity of the tool shoulders with the gripping devices 7 and 8, even when the materials are thin and low in stiffness, buckling of the metal plates due to the thermal expansion and thermal deformation by frictional heat generated during friction stir welding, the exclusion force during probe passing and the shearing force of the material generated by the rotation of the shoulders is suppressed while maintaining butting accuracy of the metal plates 1 and 2 at a high level and stable welding is implemented.

(Defining the tool distal end clearance)

Next, the clearance δ between the distal ends of the probes 13a and 13b on the upper and lower rotary tools 5, 6 is described below.

In order to obtain a desired welding strength in the joining method in which friction stir is carried out by imparting the clearance δ between the distal ends of the probes 13a and 13b of the upper and lower rotary tools 5 and 6, it is desirable that the clearance $\delta$ is set to be a ratio not less than 1%, but not greater than 50% of the thickness of the welding portion J between the metal plates 1 and 2, and in case of butt welding, of the plate thickness "t" (t1=t2). More specifically, the following relationships are established:

$$\delta = t1(t2) - L1 - L2$$

$$\delta/t1(t2) = 1\% \text{ to } 50\%$$

$\delta$: Clearance between the upper and lower tool probe distal ends
t1: Thickness of the metal plate 1
t2: Thickness of the metal plate 2
L1: Insertion depth of the upper rotary tool
L2: Insertion depth of the lower rotary tool

The reasons for the above are described below.

First, the clearance $\delta$ is set to be not greater than 50% of the plate thickness "t" for the following reason.

As described above, the unstirred surfaces are joined as a result of solid-phase welding of an unstirred new surface 18 due to the forces in the portion of the clearance $\delta$, i.e., the vertical pressing forces F1 from the upper and lower rotary tools 5 and 6 and the horizontal reaction forces F2 including a reaction of a deformation force due to thermal expansion and a reaction of the exclusion force during probe passing that are generated by constraining the metal plates in the vicinity of the shoulders 5b and 6b of the upper and lower rotary tools 5 and 6 with the inlet and outlet gripping devices 7 and 8. In this case, if the clearance $\delta$ increases excessively, the surface pressure of the new surface 18 reduces, and correspondingly the solid-phase welding is insufficient, so that the desired welding strength is prevented from being obtained.

The present inventors studied the upper limit of the clearance $\delta$ for obtaining the desired welding strength on the basis of the strength of the welding portion of aluminum materials, and obtained the following knowledge.

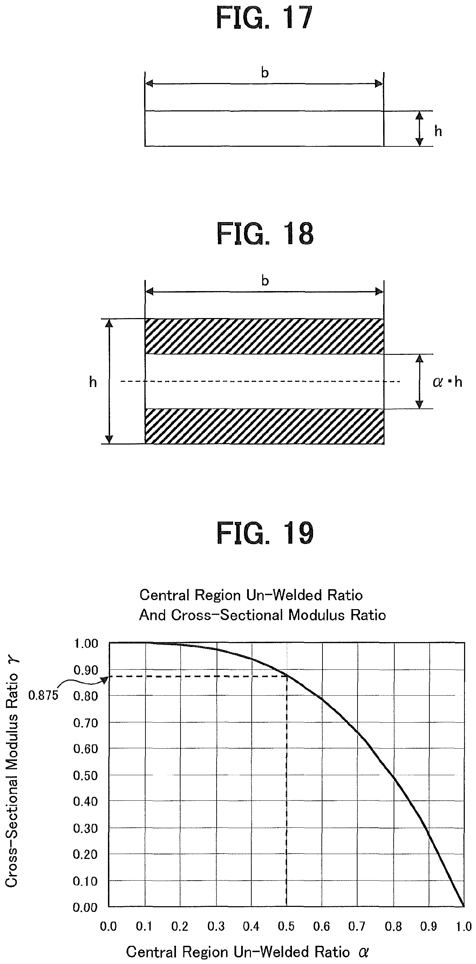

Fig. 17 shows simulatively a cross section of a welding surface boundary portion having no un-welded region, and Fig. 18 shows simulatively a cross section of welding surface boundary portion having an un-welded region (spatial void). A section modulus Z of the cross section of the welding surface boundary portion shown in Fig. 17 that has no un-welded region, and a section modulus Z$\alpha$ of the cross section of the welding surface boundary portion shown in Fig. 18 that has an un-welded region (spatial void) are represented by expressions (1) and (2), respectively.

$$Z = b \times h^2 / 6 \ldots (1)$$

$$Z\alpha = (1 - \alpha^3) \times b \times h^2 / 6 \ldots (2)$$

In above expressions (1) and (2), "b" denotes plate width (section length), "h" denotes the plate thickness (section height), and $\alpha$ denotes an un-welded surface ratio. The un-welded surface ratio $\alpha$ is represented by the following expression.

$$\text{Un-welded surface ratio } \alpha = \text{Area of the un-welded region (spatial voids) at the welding surface boundary portion / Total area of the welding surface boundary portion } \ldots (3)$$

The un-welded surface ratio $\alpha$ in the case of Fig. 17 in which the welding surface boundary portion is all a welded region (no un-welded region) is 0, and the un-welded surface ratio $\alpha$ in the case of Fig. 18 in which the welding surface boundary portion is all an un-welded region (no welded region) is 1. the expression (1) corresponds to the case in which $\alpha$=0 is assigned to the expression (2).

Section modulus ratios $\gamma$ in the case in which the welding surface boundary portion has no un-welded region and in the case in which the welding surface boundary portion has an un-welded region (special void) are represented as follows from expressions (1) and (2):

$$\gamma = Z\alpha/Z = 1 - \alpha^3 \ \ldots \ (4)$$

From the expression (4), the section modulus ratio $\gamma$ always takes the same value regardless of the plate width "b" and the plate thickness "h". Fig. 19 shows a relationship between the un-welded surface ratio $\alpha$ and section modulus ratio $\gamma$ in expression (4).

The strength of the FSW welded region in the case where clearance is present between the probes is represented by the following expression using the section modulus ratio $\gamma$.

$$\text{Strength of the welded region} = \text{FSW strength} \ \text{x}$$

$$\text{Section modulus ratio } \gamma \ \ldots \ (5)$$

When the un-welded surface ratio $\alpha$ is 0.5, that is, when the clearance $\delta$ between the probes of the upper and lower rotary tools is 50%, the section modulus ratio $\gamma$ is 0.875. Therefore, although an unstirred region is left in the central portion, a decrease ratio of bending strength in the welding portion can be controlled below nearly 13% of a conventional value. By setting the welding ratio appropriately depending on the bending strength required, a desired bending strength can be obtained even without stirring the entire surfaces to be welded.

The above considerations was made for the case that the metal plates to be joined are aluminum materials. However, these considerations also can be applied to the case that material is copper. In such a case, substantially the same effects can be obtained if the clearance $\delta$ is set to be not greater than 50% of the plate thickness "t". When the materials to be joined are steel, a decrease in joint strength of a weld for the base material is relatively small compared with that of aluminum, and in this case, substantially the same effects can be obtained as well if the clearance $\delta$ is set to be not greater than 50% of the plate thickness "t".

Meanwhile, as described above, during friction stirring with the rotary tools 5 and 6, it is unavoidable for the rotary tools 5 and 6 to suffer very insignificant vibration due to reasons such as a change in the load in the welding portion or a clearance in a movable section. If the clearance $\delta$ is set to be less than 1% of the plate thickness "t" (t1=t2) of the metal plates 1 and 2, therefore, the rotary tools 5 and 6 are liable to interfere (come into contact) at the respective distal ends. By setting the clearance $\delta$ to be not less than 1% of the plate thickness "t" (t1=t2) of the metal plates 1 and 2, the distal ends of the rotary tools 5 and 6 are prevented from interfering, even when the tools suffer very insignificant vibration, thereby improving the rotary tool life.

In the present invention, therefore, the clearance $\delta$ to be imparted between the distal ends of the probes 13a and 13b of the upper and lower rotary tools 5 and 6 to obtain the desired welding strength is desirably set to be not less than 1%, but not greater than 50% of the thicknesses t1 and t2 of the metal plates 1 and 2. For higher welding strength, the clearance $\delta$ is more desirably set to be not less than 1%, but not greater than 25% of the plate thickness, and further desirably set to be not less than 1%, but not greater than 10% of the plate thickness.

(Rotational directions and shoulder diameters of the rotary tools)

The rotational directions and shoulder diameters of the rotary tools 5 and 6 are described below.

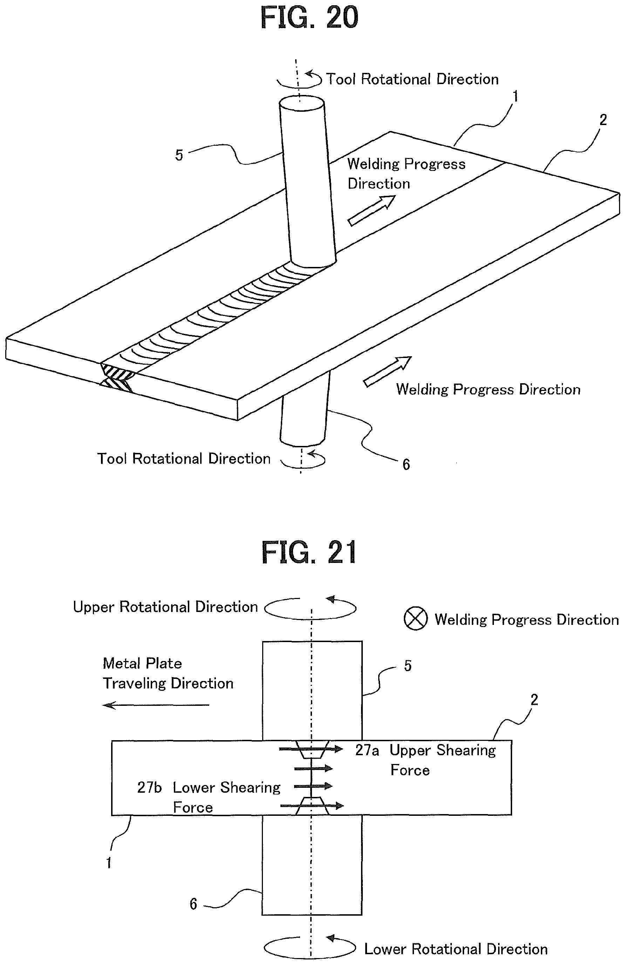

Figs. 20 and 21 show friction stir welding under conditions that the upper and lower rotary tools 5 and 6 are rotated in the same direction, that the shoulders 5b and 6b of the rotary tools 5 and 6 are of the same diameter, and that the axes of the rotary tools 5 and 6 are inclined at the same angle with respect to the traveling direction of the tool. Fig. 20 is a perspective view, and Fig. 21 is a sectional view.

As shown in Figs. 20 and 21, when the upper and lower rotary tools 5 and 6 are rotated in the same direction, the upper shearing force 27a and the lower shearing force 27b work in the same direction upon the softened section of each metal plate that is sandwiched between the tool shoulders 5b and 6b of the front and back surfaces. Therefore, when the metal plates 1 and 2 are too thin, a shearing force exceeding an allowable level may act to rupture the material.

Figs. 22 and 23 show friction stir welding under conditions that the upper and lower rotary tools 5 and 6 are rotated in opposite directions, that the shoulders 5b and 6b of the rotary tools 5 and 6 are of the same diameter, and that the axes of the rotary tools 5 and 6 are inclined at the same angle with respect to the traveling direction of the tool. Fig. 22 is a perspective view, and Fig. 23 is a sectional view.

In the present embodiment, as shown in Figs. 22 and 23, the upper and lower rotary tools 5 and 6 are rotated in opposite directions in the front surface side and the back surface side. Thus, the shearing force 27a due to stirring from the front surface side and the shearing force 27b due to stirring from the front surface side are canceled out within the interior of the welding portion, thereby preventing the material from rupturing. In addition, the gripping forces of the gripping devices 7 and 8 are reduced and thus the gripping devices are simplified.

Furthermore, as described using Figs. 9 to 12, the materials-butting surfaces in the unstirred region between the upper and lower rotary tools 5 and 6 are inclined by an action of a shearing force and elongates by plastic deformation to crush the oxide coatings, and the pressing forces due to the vertical pressing force F1 and horizontal reaction force F2 under an oxygen-free high-temperature atmosphere lead to solid-phase welding of the unstirred region as well. In the lap welding, as described using Figs. 9 and 10, by rotating the upper and lower rotary tools 5 and 6 in opposite directions, the oxide coatings are crushed by plastically deforming the lapping surfaces into the S-shaped form, and the unstirred region is welded in solid-phase as well by being pressed under an oxygen-free high-temperature atmosphere.

Consequently, not only the stirred region but also the unstirred region can contribute to the strength of the welding portion, so that welding strength can be improved significantly compared with the conventional joining method.

On the other hand, when the rotary tools 5 and 6 are rotated in the same direction, it differs from the case in which the rotary tools 5 and 6 are rotated in opposite directions, in that the material butting surfaces in the unstirred region between the upper and lower rotary tools 5 and 6 takes a C-form by an action of the shearing forces exerted in the same direction. Even in this case, however, the butting surfaces elongate by plastic deformation to crush the oxide coatings, and vertical and horizontal pressing forces result in solid-phase welding. Therefore, even if the rotary tools 5 and 6 are rotated in the same direction, welding is possible, but rotation in opposite directions is preferable in that the rupture of the metal plates is prevented and in that the gripping devices are additionally simplified.

The shoulders 5b and 6b of the rotary tools 5 and 6 are preferably formed to have the same diameter. Thus, the amount and range of heat input from the front surface side are made the same as those of the back surface side, so that an imbalance between residual stresses in the direction of the plate thickness is suppressed, whereby the same tensile strength and bending strength levels between the front and back surfaces can be obtained.

(Types of rotary tool materials)

Next, material types of rotary tools 5 and 6 are described below.

One-side friction stir welding is placed in practical use in the field of nonferrous alloys, such as aluminum, that are materials of relatively low meting points. In general, friction stir welding requires increasing temperatures of its intended materials to nearly 80% of their melting points, with heat due to friction stirring. Consequently, in the welding of materials whose melting points exceed 1,000°C, friction stirring input energy per unit welding length increases and deformation resistance values also increase. Rotary tools have therefore been required to have sufficient heat resistance and sufficient fracture/rupture toughness, so that there has been no choice but to use expensive materials such as polycrystalline diamonds.

Additionally, it is unavoidable, even if these tool materials are used, that tool life is reduced by thermal impacts, tool wear, and bending stresses upon probes, and this is a hindrance to extensive application of friction stir welding to high-melting-point materials which have melting points exceeding 1,000°C.

In the present embodiment, since, as described above, a predetermined clearance $\delta$ is imparted between the distal ends of the probes 13a and 13b on the upper and lower rotary tools 5 and 6 to conduct friction stirring, the moment and thermal load acting upon the probes 13a and 13b decrease and the rotary tools 5 and 6 extend in life. This eliminates the need to use expensive polycrystalline diamonds or the like as materials of the rotary tools 5 and 6, and allows highly heat-resistant, cemented carbide alloys of sintered tungsten carbide, tungsten alloys, or the like, as alternative materials. Thus, longer-lived and more economical rotary tools can be supplied for friction stir welding of the metal plates having melting points not less than 1,000°C.

(Plunging-less)

In the conventional one-side friction stir welding, before start of the friction stirring, the operation called "plunging" is required. In the plunging operation, the insertion positions of the rotary tools are maintained until, by rotating the rotary tools under the condition that the tool shoulder surfaces of the rotary tools are brought in contact with the surfaces of the metal plates 1 and 2, the frictional heat generated between the shoulder surfaces of the rotary tools and the surfaces of metal plates 1 and 2, the temperatures of the metal plate materials are increased to nearly 80% of the melting points at which the materials are softened. After the metal plates 1 and 2 are softened, the rotary tools are moved in the welding direction while the friction stir depth is fixed or the load of the tool rotation motors of the friction stirring device is controlled to be constant whereby friction stir welding is performed. Since the plunging is time-consuming, the welding cycle is correspondingly prolonged, and this restricts enhancement of production efficiency.

When the both-side friction stir welding is performed, since frictional heat is generated in both surfaces of the welding portion, diffusion of heat to a backing metal plate, which occurred in the conventional one-side friction stir welding, does not occur and temperature elevation is achieved at a short time. Focusing attention to the findings, the present inventors have considered that it might be possible to omit the plunging process that is performed before start of friction stir welding and friction stir welding is immediately started from edge surfaces of the metal plates 1 and 2 without plunging. As a result, it has been confirmed that the metal plates 1 and 2 render smooth plastic flow by the rotary tools 5 and 6.

In the joining method of the present invention, therefore, plunging-less friction stir welding that does not involve the plunging step can be implemented, which in turn allows the welding cycle time to be reduced and production efficiency to be enhanced.

(First inclination of the tools)

Next, inclination of the rotary tools 5 and 6 is described below.

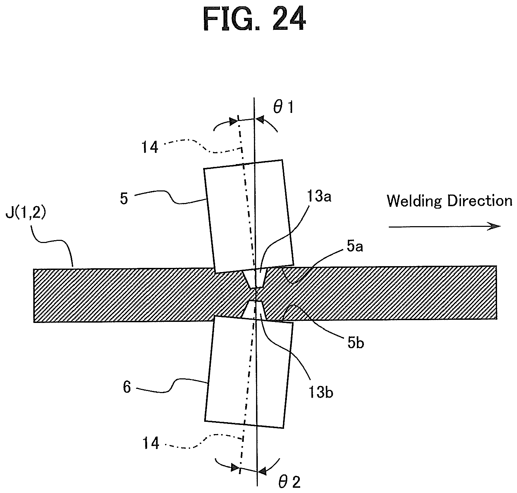

Fig. 24 is a sectional view taken in the direction of welding (the direction perpendicular to the cross section in Fig. 1) during friction stir welding while the rotary tools 5 and 6 are rotated.

In the present embodiment, the upper and lower rotary tools 5 and 6 are rotated for friction stir welding while the axes of the rotary tools 5 and 6 are inclined in the direction that the respective probes 13a and 13b move ahead of other portions of the rotary tools with respect to the traveling direction of the tools. By inclining the tool axes 14 in this way, the surface pressures between the shoulders 5b and 6b of each rotary tools 5 and 6 and the materials is enhanced, thereby enabling to suppress occurrence of any burrs and welding defects during friction stir welding.

Here, if the tool axes are inclined too much in angle, this increases an insertion depth on a trailing side of the shoulder surfaces of the rotary tools with respect to the traveling direction, in the metal plates 1 and 2. This increase, in turn, releases volumes of welding portion material of the inserted shoulders 5b and 6b from beads, partially thinning down the plate thickness at the welding portion, and thus reducing the strength of the plates at the welding portion. In particular, if the metal plates 1 and 2 to be joined are as thin as 2 mm or less, thickness of the plates at the welding portion decreases at a high rate and the rupture of the plate begins at the welding portion.

When the plate thickness of the metal plates 1 and 2 is 2 mm or less, therefore, by controlling the inclination angle $\theta 1$ or $\theta 2$ to exceed 0°, but not greater than 3°, a decrease in the strength of the plates at the welding portion due to a partial decrease in the thickness of the plates is suppressed, and hence the plate rupture at the welding portion is suppressed. Further, to suppress the local decrease in the thickness of the plates at the welding portion, the inclination angle $\theta 1$ or $\theta 2$ is preferably controlled to exceed 0°, but not greater than 2°, and more preferably controlled to exceed 0°, but not greater than 1°.

In addition, by setting the inclination angles $\theta 1$ and $\theta 2$ of the upper and lower rotary tools 5 and 6 to be the same with each other, since the same welding state can be created in both of the front and back surfaces, substantially the same levels of tensile strength and bending strength can be obtained on the front and back surfaces of the plates.

(Second inclination of the tools)

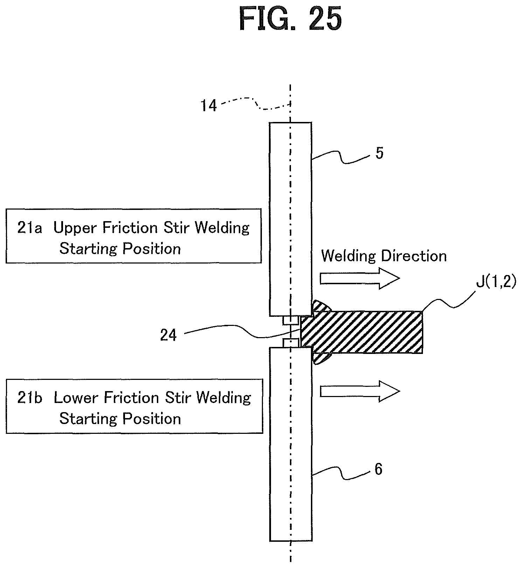

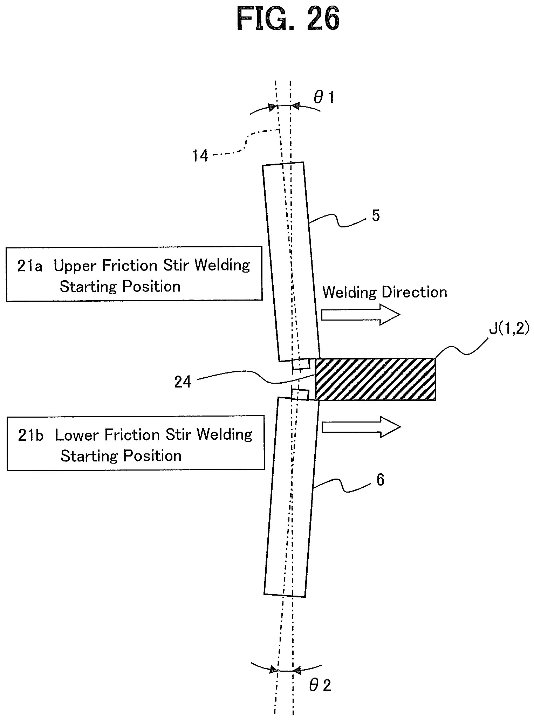

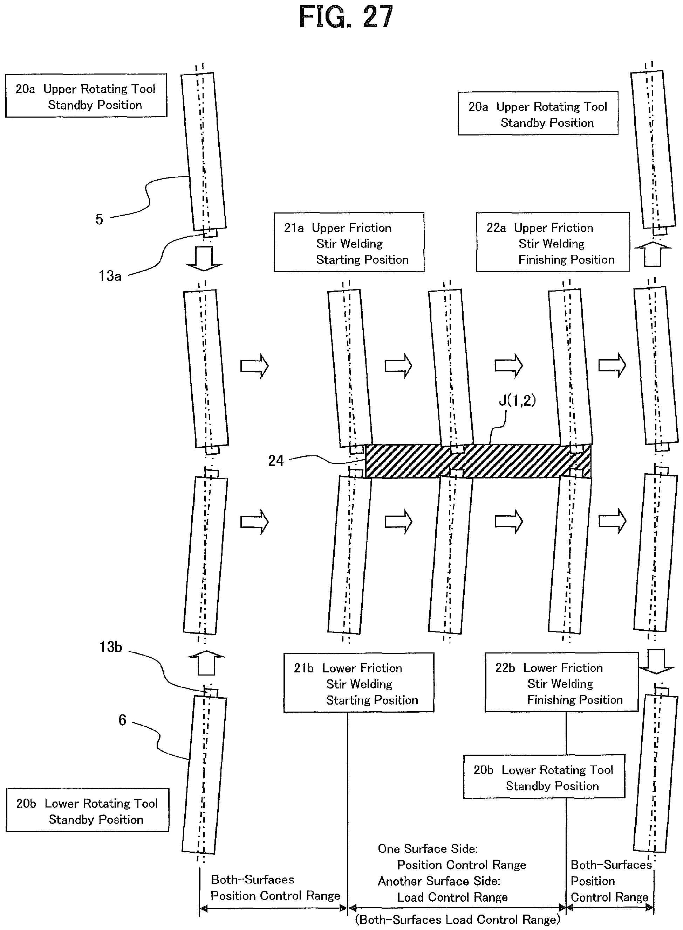

In the joining method of the present embodiment, as described later, the upper and lower rotary tools 5 and 6 are each moved to a planned insertion depth by position control in a thickness direction of the metal plates prior to start of friction stir welding, then the rotary tools 5 and 6 are moved by position control in a traveling direction thereof from an edge surface of the welding portion with the insertion depth of the rotary tool 5 and 6 maintained, so that the rotary tools 5 and 6 are inserted into the metal plates from the edge surface of the welding portion with the position control maintained, whereby the friction stir welding is started with plunging-less (see Figs.27, etc.). By inclining the axes of the rotary tools 5 and 6 in the direction that the respective probes 13a and 13b move ahead of other portions of the rotary tools with respect to the traveling direction of the tools at the time of starting the friction stir welding with plunging-less in that way, collisions between the edge surface of the welding portion and a lateral surface of each rotary tool is preventing from occurring, and thus the buckling of the metal plates and other problems are prevented from occurring at the edge surface of the welding portion, thereby enabling the smooth start of friction stirring. These are described below using Figs. 25 and 26.

Fig. 25 is an explanatory view showing the case in which the upper and lower rotary tools 5 and 6 are inserted from an edge surface of the welding portion under the condition that the inclination angle of the upper and lower rotary tools 4 and 6 are set to 0 degrees (or the tools are not inclined). In order to start the friction stir welding with plunging-less, insertion positions of the upper and lower rotary tools 5 and 6 when the rotary tools 5 and 6 are inserted from the edge surface 24 of the welding portion are determined on the basis of the relative positions of the welding portion 23 and rotary tools 5 and 6. As shown in Fig. 25, when the insertion positions of the upper and lower rotary tools 5 and 6 are slightly shifted and the upper and lower rotary tools 5 and 5 are excessively inserted, there is a possibility that the side surfaces of the rotary tools 5 and 6 are forced to press the edge surface 24 of the welding portion and a trouble such as buckling of the metal plates 1 and 2 and a friction stirring defect may occur.

Fig. 26 shows the state in which the upper and lower rotary tools 5 and 6 are inserted from the edge surface 24 of the welding portion under the condition that the upper and lower rotary tools 5 and 6 are appropriately inclined. In order to smoothly insert the upper and lower rotary tools 5 and 6 from the edge surface 24, stirring is performed under the condition that the tool axes 14 are inclined in the direction that the probes 13a and 13b at tip portions of the upper and lower rotary tools 5 and 6 move ahead of other portions of the rotary tools with respect to the traveling direction of the tools as shown in Fig. 26. The inclination angles θ1 and θ2 at this time are preferably set to be greater than 0°, but not greater than 10°, more preferably greater than 0°, but not greater than 6°, and further preferably greater than 0°, but not greater than 3°.

With such setting, since the rotary tools 5 and 6 becomes engaged with the edge surface 24 from the shoulder surfaces, the side surfaces of the tools do not press the edge surface 24. Therefore, the friction stir welding can be smoothly started with plunging-less while a trouble such as metal plate buckling and friction stirring defect does not occur. After that, in the friction stir welding process, since the axes of the upper and lower rotary tools 5 and 6 are inclined, the surface pressures between the shoulders of the rotary tools 5 and 6 and the materials is increased, and occurrence of burrs and welding defects during friction stir welding can be suppressed.

(Operating method)

Next, a method of operating the apparatus for carrying out both-side friction stir welding with plunging-less is described below.

A control system associated with the operating method is first described.

As shown in Figs. 1 and 3, the joining apparatus according to the present embodiment includes: an upper position measuring device 81a mounted on a lower surface of the upper body casing 51; an upper load measuring device 82a mounted between the cylindrical body 53 of the upper friction stirring device 3 and the support frame 63a; a lower position measuring device (load cell) 81b mounted on an upper surface of the lower body casing 52; a lower load measuring device (load cell) 82b mounted between the cylindrical body 54 of the lower friction stirring device 4 and the support frame 63b (not shown) for the lower friction stirring device 4; and a control device 83. The control device 83 receives data measured by the upper and lower position measuring devices 81a, 81b and the upper and lower load measuring devices 82a, 82b, and conducts predetermined arithmetic processing. The control device 83 then transmits command signals to the rotation motors 29a, 29b of the upper and lower friction stirring devices 3, 4, the pressing motors 61a, 61b of the upper and lower pressing and clearance adjusting devices 55, 56, and the traveling motors 67a, 67b of the upper and lower moving devices 57, 58 to control operations of the upper and lower friction stirring devices 3, 4, the upper and lower pressing and clearance adjusting devices 55, 56 and the upper and lower moving devices 57, 58. By way of example, in Fig. 1, the upper and lower position measuring devices 81a, 81b are of non-contact type, but may be of contact type. In addition, when the upper and lower inclining support devices 76a, 76b are of angle adjustable type, the control device 83 transmits command signals to the angle control motors 77a and 77b of the inclining support devices 76a, 76b on the basis of preset data to incline the axes 14 of the upper and lower rotary tools 5, 6 and support the tools at a predetermined angle.

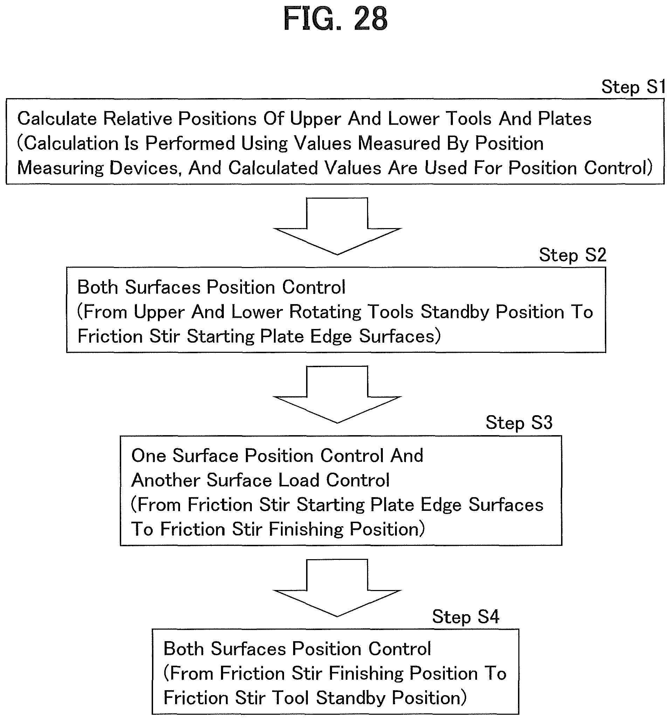

Fig. 27 shows the operating method for performing the both-side friction stir welding with plunging-less while the axes 14 of the rotary tools 5, 6 are inclined. Fig. 28 is a control flow of procedure of a process performed by the control device 83 shown in Fig. 3.

As shown in Figs. 27 and 28, before start of friction stir welding, the upper and lower friction stirring devices 3 and 4 are positioned at standby positions 20a and 20b, respectively. At the standby positions 20a and 20b, the axes of the upper and lower the rotary tools 5 and 6 are inclined. In addition, the upper and lower position measuring devices 31a and 31b (see Figs. 1 and 3) that are mounted on the upper and lower body casings 51 and 52 are used to measure distances between the welding portion J and the upper and lower friction stirring devices 3 and 4, and compute a planned insertion depth of the rotary tools 5 and 6 (step S1). Next, the upper and lower pressing motors 61a and 61b are driven to move the upper and lower rotary tools 5 and 6 to the planned insertion depth by position control (step S2). At this time, the clearance δ between the distal ends of the upper rotary tool probe 13a and lower rotary tool probe 13b is set to stay the foregoing required range (e.g., a ratio not less than 1%, but not larger than 50% of the plate thickness "t"), on the basis of the values measured by the position measuring devices 81a, 81b. Then, under the condition that the insertion positions of the tools are maintained by position control, the upper and lower traveling motors 67a and 67b are driven to move the upper and lower friction stirring devices 3 and 4 in the welding direction (step S2) and friction stir welding is started from friction stir starting positions 20a and 20b at the edge surface 24 of the welding portion. At this time, as described above, the friction stir welding is started with plunging-less by inserting the rotary tools 5 and 6 into the metal plates from the edge surface of the welding portion into the metal plates while pressing the shoulder surfaces of the tools 5, 6 against the edge surface of the welding portion as the position control is maintained (see Fig. 27, etc.).

After start of friction stir welding, a constant load control is carried out to control the insertion position of the upper rotary tool 5 so that the load applied to the upper rotation motor 29a is maintained at a predetermined value on the basis of a control current of the motor 29a for the upper rotary tool 5 (step S3), and before the tools reach positions 22a and 22b at which friction stir welding finishes, the control is switched to constant position control to maintain the insertion positions of the tools that are positioned at that time (step S3 to step S4) and further to control the tools to pass through the friction stir finishing positions 22a and 22b. As for the lower rotary tool 6, even after start of friction stir welding, position control is maintained and the tool 6 is allowed to pass through the friction stir finishing positions 22a and 22b while the position control is maintained (step S3 to step S4).

In this way, by maintaining the position control for the lower rotary tool 6 and switching the control for the upper rotary tool 5 to constant load control after start of friction stir welding, stable friction stirring can be realized even when the thickness of the welding portion J varies.

In addition, since the loads applied to the upper and lower rotary tools are kept constant, wear and damage of the tools can be suppressed, hence increasing the tool life.

The above control in each step is carried out by the control device 83 that receives the value measured by the upper and lower position measuring devices 31a, 31b and then, on the basis of the measured values and the control currents of the upper and lower rotation motors 29a, 29b, provides operating commands to various actuators such as the upper and lower rotation motors 29a, 29b, the upper and lower pressing motors 61a, 61b and the upper and lower traveling motors 67a, 67b.

Although in the above operating method, the constant load control of the upper rotary tool 5 is carried out by using the control current of the rotation motor 29a, the values measured by the load measuring devices 82a, 82b may be used instead. Additionally, although the position control of the upper and lower rotary tools 5 and 6 is carried out by using the values measured by the upper and lower position measuring devices 31a, 31b, rotation sensors such as encoders that detect the rotational amounts of the upper and lower pressing motors 61a, 61b may be used instead.

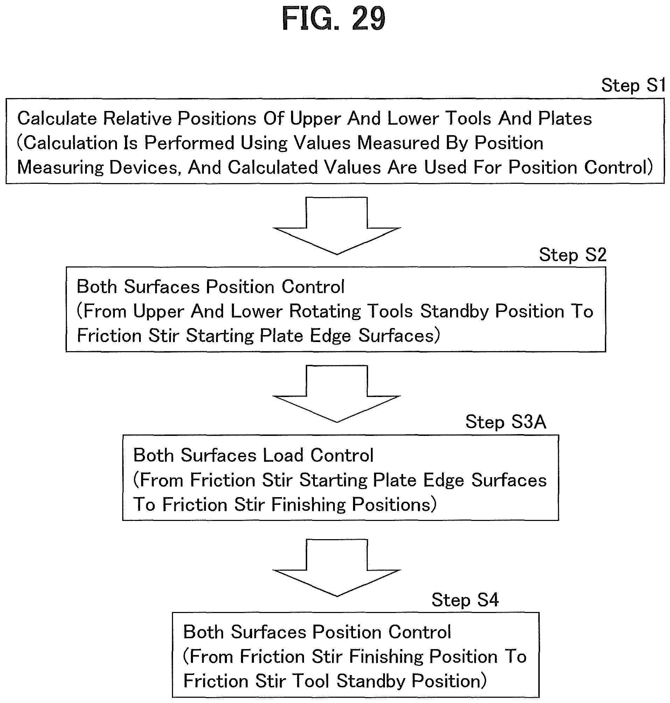

Fig. 29 is a control flow showing another example of procedures if a process performed by the control device 83. In this example, in the range from the friction stir starting positions 21a and 21b in Fig. 27 to the friction stir finishing positions 22a and 22b, not only the upper rotary tool 5 is subjected to constant load control, but both of the upper and lower rotary tools 5 and 6 are subjected to constant load control (step S3A). In Fig. 27, this example is supplementarily described in parentheses in the range from the friction stir starting positions 21a, 21b to the friction stir finishing positions 22a, 22b.

In the method of controlling the upper and lower rotary tools 5 and 6, when the lower rotary tool 6 is placed under constant position control after start of friction stir welding as well, the back surfaces of the metal plates serves as a reference surface. In this case, if the reference surface is not uniform due to deformation of the metal plates or the like, when the materials are thin (or low in stiffness) and low in deformation resistance, it is possible to nearly match the upper and lower friction stirring ranges by the pressing force from the upper rotary tool 5 against the metal plate generated by constant load control of the tool 5 only. However, it has been confirmed by the present inventors that when the material is thick (or high in stiffness) and high in deformation resistance, it is occasionally difficult to match the friction stirring ranges of the front and back surfaces of the metal plates by the pressing force from the upper rotary tool 5 against the metal plate generated by constant load control of the tool 5 only.

When the friction stirring ranges are different between the front and back surfaces of the metal plates, residual stresses are unbalanced in the direction of the thicknesses of the plates, so that differences in tensile strength and bending strength between the front and back surfaces are generated, and this may a factor that reduces strength reliability.

Additionally, when one of the rotary tools is subjected to position control, owing the unbalanced pressing forces against the front and back surfaces, forces due to the pressing forces are applied to the gripping devices 7 and 8 that grip the metal plates. Therefore, in addition to the gripping forces of the metal plates, the forces applied to the gripping devices 7 and 8 by the unbalanced pressing forces against the front and back surfaces is necessary to be maintained, so that there is a possibility that the gripping devices 7 and 8 need to be large.

To avoid these problems, when the metal plates are thick or high in stiffness, as described in parentheses shown in Fig. 27 and in step S3A of the control flow in Fig. 29, the lower rotary tool 6 is also placed under rotation motor constant load control after start of the friction stir welding, so that the upper and lower rotary tools 5 and 6 are both subjected to constant load control. Thus, the amounts and ranges of heat input from the front and back surfaces of the metal plates become the same, thereby enabling the residual stresses in the front and back surfaces to be uniform and to prevent the metal plate from warping.

On the other hand, when the metal plates are sufficiently thin or low in stiffness, the upper and lower rotary tools 5 and 6 may be subjected to position control at all times including the time period of friction stir welding.

(Friction stirring control of a stepped welding portion)

Next, joining methods of two patterns in which metal plates 1 and 2 of different plate thicknesses or a stepped welding portion is friction stirred in both surface sides are explained below.

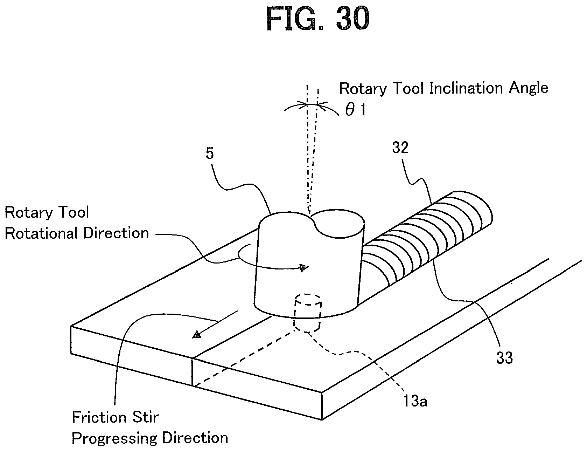

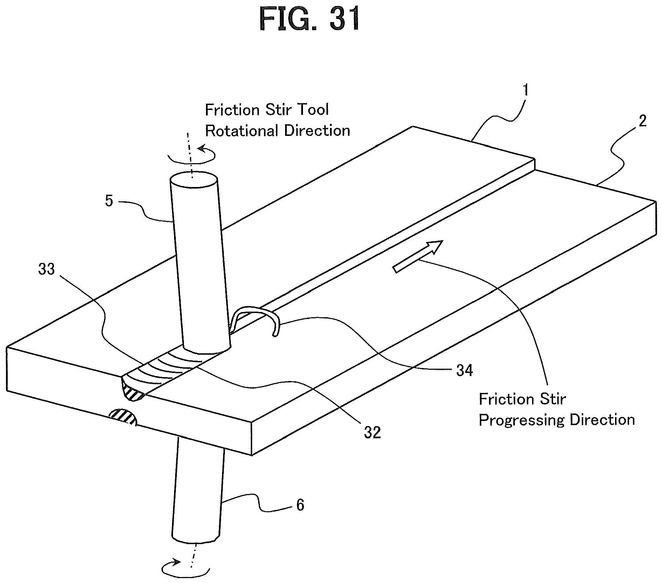

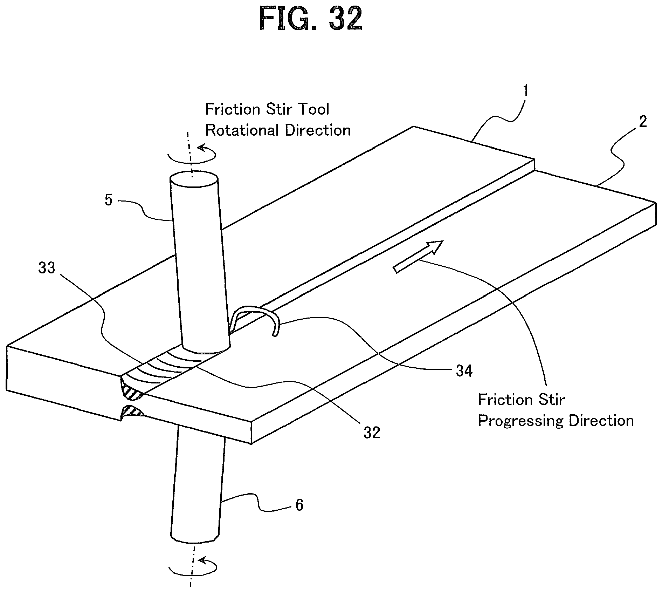

Fig. 30 shows relationships between an advancing side and retreating side and a rotational direction of a friction stirring tool. Figs. 31 and 32 show methods in which metal plates 1 and 2 of different thicknesses or a stepped welding portion is frictionally stirred in both-sides.

As shown in Fig. 30, a side at which the rotational direction of the rotary tool 5 and a progressing direction of friction stirring (a welding direction or a feed direction of the tool) agree is referred to as the advancing side, and a side at which the rotational direction of the rotary tool 5 and the progressing direction of friction stirring are opposite is referred to as the retreating side.

Concerning a one-side friction stir welding method, Japanese Patent 3931119 discloses a method in which, when a first material to be joined having a high-temperature deformation resistance value Y1 and a thickness value t1 and a second material to be joined having a high-temperature deformation resistance value Y2 and a thickness value t2 are disposed in a butting condition, if a relational expression of $Y1 \times t1 < Y2 \times t2$ is satisfied, the first material is disposed at the advancing side, and if a relational expression of $Y1 \times t1 > Y2 \times t2$ is satisfied, the second material is disposed at the advancing side.

For example, if the first material and the second material are of the same high-temperature deformation resistance and have different thicknesses, as in a case of Y1 = 25 MPa, t1 = 3 mm, Y2 = 25 MPa, t2 = 2 mm, then this satisfies $Y1 \times t1 > Y2 \times t2$.

Thus, this case is adapted for a method in which the second material side (the thinner plate side) is disposed at the advancing side.

However, for example, if the first material has characteristics of Y1 = 25 MPa, t1 = 3 mm and the second material has characteristics of Y2 = 100 MPa, t2 = 2 mm, then $Y1 \times t1 < Y2 \times t2$ is satisfied since a value of $Y1 \times t1$ of the first material is smaller than that of $Y2 \times t2$ of the second material.

Thus, the first material side (the thicker plate side) is disposed at the advancing side, and the thinner plate side is not necessarily disposed at the advancing side.

Accordingly, the problems occur that regions of different thicknesses cannot be properly welded to form a smooth surface and thus desired welding strength is unobtainable.

According to the present invention, as shown in Fig. 31, when the two metal plates to be butt welded differ in thickness, the metal plates are gripped by the gripping devices such that no stepped portion is formed on one surface side of the plates (in the present example, the back surface side). In addition, the rotational direction of the rotary tool on the stepped surface side (in the present example, the front surface side) is set such that the thinner metal plate side is positioned at the advancing side 32, and the rotational direction of the rotary tool at the non-stepped surface side is set to be opposite to that of the rotary tool in the stepped surface side.

With such setting, the non-stepped surface side can be welded with a method equivalent to the normal friction stir welding, and in the stepped surface side, plastic flow of material from a thicker side to a thinner side is facilitated and surplus plastic flow of material 34 from the thinner side to the thicker side is caused to collide against a stepped portion in the thicker side, so that the surplus plastic flow material 34 is discharged in the feed direction of the friction stirring tool.

Though the above joining method is applied to the case where one surface side is formed in a plane having no stepped portion, when stepped portions are formed to be uniform in both surfaces, the upper and lower rotary tools 5 and 6 are rotated in the directions such that, as shown in Fig. 32, the circumferential velocity of each tool in the thicker material side or higher side of the stepped portion of the welding portion is oriented in the direction opposite to the travel direction of the tool. Under these rotating and traveling conditions of the rotary tools, the thicker side of material or higher side of the stepped portion of the welding portion is set to be positioned at the retreating side 33, and the thinner side of material or lower side of the stepped portion of the welding portion is set to be positioned at the advancing side 32.

With such setting, in the front and back surfaces with the stepped portion, plastic flow of material from the thicker side to the thinner side is facilitated and surplus plastic flow of material 34 from the thinner side to the thicker side is caused to collide against the stepped portion in the thicker side, so that the surplus plastic flow material 34 is discharged in the feed direction of the friction stirring tool.

According to the joining method shown in Figs. 31 and 32, even in the welding of metal plates with a stepped portion, it is possible to suppress occurrence of burrs at bead ends during welding and create a welding portion of high surface quality, thereby enabling to reduce a possibility of the welding portion suffering from a rupture or other trouble in the next plastic-work step.

(Applying both-side friction stir welding to cold rolling system)

Next, applying the both-side friction stir welding apparatus of the present invention to cold rolling system is described below.

In a method to obtain desired plate thickness by circulating a coil via one stand and repeating the joining and rolling of both ends of the coil a plurality of times in such rolling system of 1,000,000 tons or less in capacity as described in International Patent Publication WO2008/062506, the plate thickness range of the leading and trailing ends of the coil that are to be joined together expands from a maximum of about 6 mm to a thickness level as small as well below 1 mm.

The plate thickness range of the materials joinable by process serialization in cold rolling system including a plurality of stands and having a production volume exceeding 1,000,000 tons is from a maximum of 6 mm to a minimum of 2 mm. Flash butt welders or laser beam welders are applied to joining cold-rolled materials.

If a flash butt welder is applied to the equipment described in International Patent Publication WO2008/062506, materials of 1.6 mm or less in plate thickness are difficult to join together, since exerting a pressing force upon the welding portion poses problems such as buckling.

If a laser beam welder is applied instead, just one type of laser beam output has a limit in the joinable-plate thickness range. Therefore, butt welding of materials including wide range of thickness, conducted from very thin metal plates well below 1 mm to metal plates of 6 mm is impossible by using one welder, and a plurality of expensive welders are required for such joining. For these reasons, very costly equipment introduction/installation has tended to render the equipment inferior in economy.

On the other hand, arc welding such as TIG (tungsten inert gas) or MIG (metal inert gas) welding is applicable to joining aluminum alloys or copper alloys. These joining methods, however, are low in welding speed or speed, taking a time of several minutes to weld rolled materials over a plate width from nearly 500 mm to 2,500 mm.

Additionally, because of arc welding, TIG or MIG welding leaves beads as bulges on the surface, so requires, in addition to a net welding time, an extra time for removing the beads, and consequently extends the welding cycle time.

In the rolling system for joining aluminum alloys or copper alloys up to nearly 20 mm in plate thickness, the proliferation of the coil joining and serializing process or coil build-up process in the conventional joining schemes has been impeded for the above reasons.

In both-side friction stir welding of the present invention, butt welding and lap welding can be combined to implement joining of a wide range of metal plates down to very thin plates well below 1 mm in thickness. Joining technology of high welding strength reliability can therefore be applied to cold rolling system at low costs.

In addition, since the probe of the tool is inserted from both front and back surfaces of the material, both-side friction stir welding of the present invention allows the insertion depth of the tool probe to be reduced to half that required in the one-side friction stir welding, thus a breakage of the probe to be suppressed, and the welding speed can be increased, thereby enabling to shorten the welding cycle time.

Furthermore, the generation of frictional heat in both front and back surfaces of the material allows the necessary softening thereof for start of friction stir welding, even without the plunging operation to soften the material, thereby enabling to shorten the welding cycle time.

Moreover, since the leading and trailing ends of the coil are joined, metal plates are continuously supplied to the rolling mill.

This makes it unnecessary to pass the leading end of the coil through the plate, minimizing trouble associated with the passing operation, and resultantly suppressing the down-time of the rolling mill.

With these effects, the reduction in productivity due to increase in the welding cycle time can be avoided as well.

Besides, in addition to reduction in the thermal load per rotary tool, replacing the rotary tool materials with highly heat-resistant, cemented carbide alloys of sintered tungsten carbide, tungsten alloys, or the like, allows extension of their rotary tool life against application to friction stirring of metal plates whose melting point is not less than 1,000°C. Briefly, more economical rotary tools minimized in running costs can be supplied.

The present invention, therefore, makes it possible to supply the both-side friction stir welding method and apparatus that can also be applied to cold rolling of steel plates.

In nonferrous metals such as aluminum alloys and copper alloys, heat input to the welding portion may reduce its strength, compared with that of the base materials. Since welding is conducted in a temperature region of approximately 80% of the melting point, a significant decrease in strength is suppressed and the occurrence of plate ruptures due to decreases in strength is consequently suppressed. Suppressing the decreases in strength has an important meaning, particularly in the cold rolling in which the materials are usually thinned down by rolling with a high tensile force from 50 N/mm2 to 100 N/mm2.

In addition, in the butt welding of metal plates of the same thickness, leading and trailing ends can be rolled, which improves production yield.

With the both-side friction stir welding method of the present invention that allows various problems to be solved, less expensive and more highly strength-reliable joining can be supplied by joining together the steel plates or nonferrous metals, such as aluminum alloys and copper alloys, which will be later subjected to cold rolling.

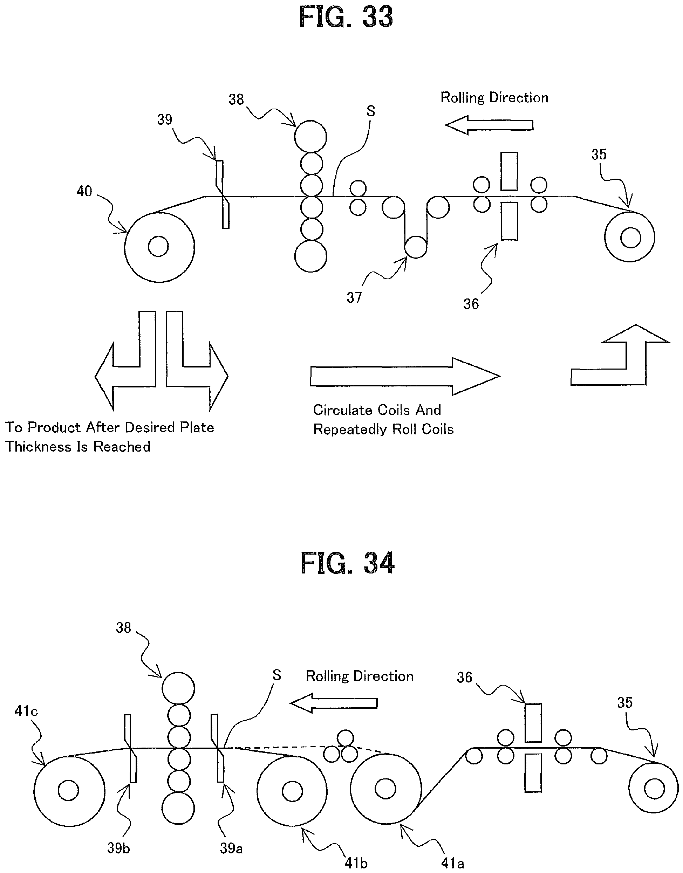

Figs. 33 and 34 show specific examples of application of the both-side friction stir welding apparatus of the present invention to cold rolling systems.

Fig. 33 shows an entire system in the case in which the both-side friction stir welding apparatus of the present invention is applied to a cold rolling system that performs one-way continuous cold rolling described in International Patent Publication WO2008/062506. Fig. 34 shows an entire system in the case in which the both-side friction stir welding apparatus of the present invention is applied to a reversible cold rolling system.

The one-way continuous cold rolling system shown in Fig. 33 includes an unwinding device 35, the both-side friction stir welding apparatus 36 of the present invention, a looper 37, a rolling mill 38, a cutter 39, and a winding device 40.

A coil is unwound from the unwinding device 35 and a strip (metal plate) S is rolled by the rolling mill 38 and wound by the winding device 40. At this time, strips S of several coils are joined by the joining apparatus 36 and are rolled in one direction. The coil that has been wound by the winding device 40 is transferred therefrom to the unwinding device 35 by a transporting device, and the coil is circulated until desired thickness is reached while the strip S is repeatedly rolled. When the desired thickness has been reached, the strip S is cut to a desired size by the cutter 39 and unloaded as a product coil. During welding by the joining apparatus 36 and during cutting of the strip S by the cutter 39, the rolling mill 38 is not stopped and an extremely low speed rolling at a speed as low as 10 mpm or less is carried out. At this time, joining of strips S by the joining apparatus 36 is conducted by utilizing the looper 37.

The reversible cold rolling system shown in Fig. 34 is a cold rolling system comprising a coil build-up line and a reversible cold rolling line combined therewith, which includes an unwinding device 35, the both-side friction stir welding apparatus 36 of the present invention, a first winding/unwinding device 41a, a second winding/unwinding device 41b, a first cutter 39a, a rolling mill 38, a second cutter 39b, and a third winding/unwinding device 41c.

Before rolling is started, strips S of several coils are joined by the joining apparatus 36 in the coil build-up line, and the built up coils are wound from the unwinding device 35 to the first winding/unwinding device 41a.

In a first pass of rolling of the built up coil, the coil is unwound from the first winding/unwinding device 41a and a strip (metal plate) S is rolled by the rolling mill 38 and wound by the third winding/unwinding device 41c. In a second pass, a coil is unwound from the third winding/unwinding device 41c and the strip S is rolled by the rolling mill 38 and wound by the second winding/unwinding device 41b. In a third and subsequent passes, the strip S is repeatedly rolled by reverse rolling between the second winding/unwinding device 41b and the third winding/unwinding device 41c until a desired thickness is reached.

Further, in the second and subsequent passes of the reversible rolling process, coils for the next rolling are manufactured in the coil build-up line while rolling is carried out.

In the both-side friction stir welding according to the present invention, metal plates of a wide range of thickness from very thin plates well below 1 mm to plates of nearly 6 mm can be joined. Therefore, by applying such a both-side friction stir welding of the invention to joining of metal plates subjected to cold rolling in the above-described manner, a cold rolling system of high strength reliability welding and high productivity and high yield can be provided at a low cost.

In addition, the materials to be rolled in the cold rolling systems shown in Figs. 33 and 34 may be steel plates or nonferrous metals such as aluminum alloys or copper alloys. Therefore, by applying the both-side friction stir welding of the present invention to joining of cold-rolled metal plates of nonferrous metals such as aluminum alloys or copper alloys of up to nearly 20 mm in thickness, a cold rolling system of high strength reliability welding and high productivity and high yield can be provided at a low cost.

| 1, 2 | Metal plates |
|---|---|
| 3 | Upper friction stirring device |
| 4 | Lower friction stirring device |
| 5 | Upper rotary tool |
| 5a | Tool body |
| 5b | Shoulder |
| 6 | Lower rotary tool |
| 6a | Tool body |
| 6b | Shoulder |
| 7 | Inlet upper gripping device |
| 7a, 7b | Upper and lower gripping plates |
| 8 | Outlet lower gripping device |
| 8a, 8b | Upper and lower gripping plates |
| 9 | Upper housing |
| 10 | Lower housing |
| 11 | Upper rail |
| 12 | Lower rail |
| 13a | Upper tool probe |
| 13b | Lower tool probe |
| 14 | Rotary tool axis |
| 16 | Upper friction stir welding range |
| 17 | Lower friction stir welding range |
| 18 | New surface |

| | |
|---|---|
| 18b | Unstirred surface |
| 19 | Lapping surface |
| 20a | Upper rotary tool standby position |
| 20a | Lower rotary tool standby position |
| 21a | Upper friction stir starting position |
| 21b | Lower friction stir starting position |
| 22a | Upper friction stir finishing position |
| 22b | Lower friction stir finishing position |
| 24 | Metal plate edge surface for friction stir start |
| 27a | Upper shearing force |
| 27b | Lower shearing force |
| 29a | Upper rotation motor |
| 29b | Lower rotation motor |
| 32 | Advancing side |
| 33 | Retreating side |
| 34 | Surplus plastic flow material |
| 35 | Unwinding device |
| 36 | Both-side friction stir welding apparatus |
| 37 | Looper |
| 38 | Rolling mill |
| 39 | Cutter |
| 39a | First cutter |
| 39b | Second cutter |
| 40 | Winding device |
| 41 | Winding/unwinding device |
| 41a | First winding/unwinding device |
| 41b | Second winding/unwinding device |
| 41c | Third winding/unwinding device |
| 51 | Upper body casing |
| 52 | Lower body casing |
| 53 | Upper cylindrical body |
| 54 | Lower cylindrical body |
| 55 | Upper pressing and clearance adjusting device |
| 56 | Lower pressing and clearance adjusting device |
| 57 | Upper moving device |
| 58 | Lower moving device |
| 61a, 61b | Pressing motors |
| 62a, 62b | Screws |
| 63a, 63b | Support frames |
| 64a, 64b | Axles |
| 65a, 65b | Traveling frames |
| 66a, 66b | Wheels |
| 67a, 67b | Traveling motors |
| 71 | Wheel |
| 72 | Screw |
| 73 | Traveling motor |
| 74 | Traveling device |
| 75 | Control device |
| 76a | Upper inclining support device |
| 76b | Lower inclining support device |
| 77a, 77b | Angle control motor |
| 81a | Upper position measuring device |
| 81b | Lower position measuring device |
| 82a | Upper load measuring device |
| 82b | Lower load measuring device |
| 83 | Control device |
| $\delta$ | Clearance |
| J | Welding portion |

θ1, θ2          Inclination angle

**Claims**

1.  A both-side friction stir welding method for joining two metal plates (1, 2) together, in which upper and lower rotary tools (5, 6) each including a tool body (5a, 5b), a probe (13a, 13b) formed at a distal end of the tool body (5a, 5b) and having a diameter smaller than that of the distal end of the tool body and a shoulder (5b, 6b) formed around a portion of the distal end of the tool body at which the probe is formed are inserted into a butting or lapping portion (J) formed as a welding portion between the two metal plates, from a front surface side and a back surface side of the butting portion, respectively, while the upper and lower rotary tools are rotated to frictionally stir the butting portion by utilizing frictional heat generated by the rotation of the tools thereby to weld the two metal plates; **characterized in that** the method comprises:

    gripping front and back surfaces of the metal plates (1, 2) with first and second gripping devices (7, 8), respectively, the metal plates (1, 2) each having a thickness smaller than a diameter of each of the shoulders (5b, 6b) of the upper and lower rotary tools (5, 6), the first and second gripping devices (7, 8) being arranged to sandwich the upper and lower rotary tools (5, 6) in the opposed sides thereof and spaced apart from each other at a distance not less than 1.5 times, but not greater than 5.0 times the diameters of the tool bodies (5a, 5b);
    disposing the upper and lower rotary tools in opposed relationship in the front surface side and the back surface side of the butting or lapping portion (J) of the two metal plates, respectively, moving the upper and lower rotary tools in a direction in which the upper and lower rotary tools approach to each other, and imparting a predetermined clearance (δ) set to be a ratio not less than 1%, but not greater than 50% of the thickness of the welding portion (J) of the two metal plates (1, 2), between distal ends of the probes (13a, 13b) of the upper and lower rotary tools while pressing the shoulders (5b, 6b) thereof against the front surface side and the back surface side of the butting or lapping portion; and
    moving, under that state, the upper and lower rotary tools along the butting or lapping portion while rotating the rotary tools thereby to perform the friction stir welding.

2.  The both-side friction stir welding method according to claim 1, wherein:

    the upper and lower rotary tools (5, 6) are disposed such that the axes (14) thereof is inclined in a direction in which the respective probes (13a, 13b) move ahead of the other portions of the rotary tools with respect to a traveling direction of the upper and lower rotary tools.

3.  The both-side friction stir welding method according to claim 1, wherein:

    the upper and lower rotary tools (5, 6) are rotated in opposite directions in the front surface side and the back surface side of the welding portion.

4.  The both-side friction stir welding method according to any one of claims 1 to 3, wherein:

    the respective shoulders (5b, 6b) of the upper and lower rotary tools (5, 6) are made of the same diameter.

5.  The both-side friction stir welding method according to any one of claims 2 to 4, wherein:

    the inclination angles of the axes (14) of the upper and lower rotary tools (5, 6) are set to be at angles exceeding 0°, but not greater than 3°, when the thickness of the metal plates (1, 2) is 2 mm or less.

6.  The both-side friction stir welding method according to any one of claims 2 to 5, wherein:

    the inclination angles of the axes (14) of the upper and lower rotary tools (5, 6) are set to be the same with each other.

7.  The both-side friction stir welding method according to any one of claims 1 to 6, wherein:

    the upper and lower rotary tools (5, 6) are pressed against the welding portion (J) of the two metal plates (1, 2) from the front surface side and the back surface side of the welding portion, respectively, so as to apply the same pressing forces to the front surface side and the back surface side.

8. The both-side friction stir welding method according to any one of claim 1 and claims 2 to 7, wherein:

the welding portion between the two metal plates (1, 2) is the butting portion (J) and when the two metal plates (1, 2) differ from each other in thickness, the two metal plates are gripped with the first and second gripping devices (7, 8) such that no stepped portion is formed at the welding portion in one of the front and back surface sides of the two metal plates; and
one of the upper and lower rotary tools (5 or 6) that is disposed at a stepped surface side is rotated in a direction that the thinner metal plate side is positioned at an advancing side, while the other rotary tool that is disposed at the non-stepped surface side is rotated in a direction opposite to the direction of rotation of the rotary tool disposed in the stepped surface side.

9. The both-side friction stir welding method according to any one of claim 1 and claims 2 to 7, wherein:

the welding portion between the two metal plates (1, 2) is the butting portion (J) and when the two metal plates (1, 2) differ from each other in thickness, the two metal plates are gripped with the first and second gripping devices (7, 8) such that stepped portions in the front and back surface sides of the metal plates are uniform; and
the upper and lower rotary tools (5, 6) are rotated in the same direction such that the thinner sides of the metal plates are positioned at an advancing side.

10. The both-side friction stir welding method according to any one of claims 1 to 9, wherein:

one rotary tool (6) of the upper and lower rotary tools (5, 6) is moved to a planned insertion depth by position control in a thickness direction of the metal plates (1, 2) prior to a start of friction stir welding, then the tool is moved by position control in a traveling direction of the tool from an edge surface (24) of the welding portion with the insertion depth of the rotary tool (6) maintained, so that the rotary tool (6) is inserted into the metal plates from the edge surface (24) of the welding portion with the position control maintained to start the friction stir welding, and thereafter, the tool is moved until the friction stir welding is ended, while maintaining the insertion position thereof by position control with respect to the thickness direction of the metal plates; and
the other rotary tool (5) is moved to a planned insertion depth by position control in the thickness direction of the metal plates (1, 2) prior to a start of friction stir welding as with the rotary tool (6), then the tool is moved by position control in a traveling direction thereof from the edge surface (24) of the welding portion with the insertion depth of the rotary tool (5) maintained, so that the rotary tool (5) is inserted into the metal plates from the edge surface (24) of the welding portion with the position control in the thickness direction of the metal plates (1, 2) maintained to start the friction stir welding; and after the start of the friction stir welding, the rotary tool (5) is moved synchronously with the feed position of the one rotary tool (6), while during the movement of the rotary tool (5), constant load control is carried out that controls the insertion position of the tool (5) such that a load applied to the rotary tool is maintained at a predetermined value; and then, before the rotary tool (5) reaches a joining finishing end at which the friction stir welding is ended, the constant load control is switched to the position control that retains the insertion position of the tool (5) at the time when the rotary tool (5) reaches the joining finishing end, and thereafter the tool is allowed to pass through the joining finishing end to finish the friction stir welding.

11. The both-side friction stir welding method according to any one of claims 1 to 9, wherein:

the upper and lower rotary tools (5, 6) are each moved to a planned insertion depth by position control in a thickness direction of the metal plates (1, 2) prior to a start of friction stir welding, then the tools are moved by position control in a traveling direction thereof from an edge surface (24) of the welding portion with the insertion depth of the rotary tool (5, 6) maintained, so that the rotary tools (5, 6) are inserted into the metal plates from the edge surface (24) of the welding portion with the position control maintained to start the friction stir welding, and after the start of the friction stir welding, constant load control is carried out that controls the insertion position of the rotary tools (5, 6) such that a load applied to each of the rotary tools is maintained at a predetermined value, and then before the rotary tools (5, 6) reach a joining finishing end at which the friction stir welding is ended, the constant load control is switched to the position control that retains the insertion position of the rotary tools (5, 6) at the time when the rotary tools (5, 6) reach the joining finishing end, and thereafter the tools are allowed to pass through the joining finishing end to finish the friction stir welding.

**12.** The both-side friction stir welding method according to any one of claims 1 to 11, wherein:

the upper and lower rotary tools (5, 6) are each made of a cemented carbide alloy of sintered tungsten carbide, a tungsten alloy, or the like; and
the two metal plates (1, 2) are made of a high-melting-temperature material whose melting temperature is not less than 1,000°C.

**13.** A metal plates joining method in cold-rolling system, the method comprising the step of joining metal plates (S) delivered to cold rolling by using the both-side friction stir welding method according to any one of claims 1 to 12.

**14.** A both-side friction stir welding apparatus for joining two metal plates (1, 2) together, in which upper and lower rotary tools (5, 6) each including a tool body (5a, 5b), a probe (13a, 13b) formed at a distal end of the tool body (5a, 5b) and having a diameter smaller than that of the distal end of the tool body and a shoulder (5b, 6b) formed around a portion of the distal end of the tool body at which the probe is formed are inserted into a butting or lapping portion (J) formed as a welding portion between the two metal plates, from a front surface side and a back surface side of the butting portion, respectively, while the upper and lower rotary tools are rotated to frictionally stir the butting portion by utilizing frictional heat generated by the rotation of the tools thereby to weld the two metal plates; **characterized in that** the apparatus comprises:

first and second gripping devices for gripping front and back surfaces of the metal plates (1, 2), respectively, the metal plates (1, 2) each having a thickness smaller than a diameter of each of the shoulders (5b, 6b) of the upper and lower rotary tools (5, 6), the first and second gripping devices (7, 8) being arranged to sandwich the upper and lower rotary tools (5, 6) in the opposed sides thereof and spaced apart from each other at a distance not less than 1.5 times, but not greater than 5.0 times the diameters of the tool bodies (5a, 5b);
an upper friction stirring device (3) and a lower friction stirring device (4) having the upper and lower rotary tools one by one, respectively, the upper and lower rotary tools being disposed in opposed relationship in the front surface side and the back surface side of the butting or lapping portion (J) of the two metal plates, respectively; pressing and clearance adjusting devices (55, 56) for moving the upper and lower rotary tools of the upper and lower friction stirring devices in a direction in which the upper and lower rotary tools approach to each other, and imparting a predetermined clearance ($\delta$) set to be a ratio not less than 1%, but not greater than 50% of the thickness of the welding portion (J) of the two metal plates (1, 2), between distal ends of the probes (13a, 13b) of the upper and lower rotary tools while pressing the shoulders (5b, 6b) thereof against the front surface side and the back surface side of the butting or lapping portion; and
moving device (57, 58) for moving the upper and lower rotary tools of the upper and lower friction stirring devices along the butting or lapping portion (J).

**15.** The both-side friction stir welding apparatus according to claim 14, further comprising upper and lower inclining support devices (76a, 76b) for supporting the upper and lower rotary tools (5, 6) of the upper and lower friction stirring devices (3, 4) such that the axes (14) of the upper and lower rotary tools (5, 6) are inclined in a direction in which the respective probes (13a, 13b) move ahead of the other portions of the rotary tools with respect to a traveling direction of the upper and lower rotary tools.

**16.** The both-side friction stir welding apparatus according to any one of claims 14 to 15, wherein:

the pressing and clearance adjusting devices (55, 56) adjust the clearance ($\delta$) between the distal ends of the probes (13a, 13b) of the upper and lower rotary tools (5, 6) to stay within a ratio not less than 1%, but not greater than 50% of the thickness of the welding portion (J) of the two metal plates (1, 2).

**17.** The both-side friction stir welding apparatus according to any one of claims 14 to 16, wherein:

the first and second gripping devices (7, 8) are arranged such that a distance therebetween is set to be not less than 1.5 times, but not greater than 5.0 times the diameters of the tool bodies (5a, 5b).

**18.** The both-side friction stir welding apparatus according to any one of claims 14 to 17, wherein:

the upper and lower friction stirring devices (3, 4) rotate the respective upper and lower rotary tools (5, 6) in opposite directions in the front surface side and the back surface side of the welding portion.

19. The both-side friction stir welding apparatus according to any one of claims 15 to 18, wherein:

the inclining support devices (76a, 76b) control the inclination angles of the axes (14) of the upper and lower rotary tools (5, 6) of the upper and lower friction stirring devices (3, 4) to be at angles exceeding 0°, but not greater than 3° when the thickness of the metal plates (1, 2) is 2 mm or less.

20. The both-side friction stir welding apparatus according to any one of claims 14 to 19, further comprising a control device (83) that controls the pressing and clearance adjusting devices (55, 56) and the moving device (57, 58) such that:

one rotary tool (6) of the upper and lower rotary tools (5, 6) of the upper and lower friction stirring devices (3, 4) is moved to a planned insertion depth by position control in a thickness direction of the metal plates (1, 2) prior to a start of friction stir welding, then the tool is moved by position control in a traveling direction of the tool from an edge surface (24) of the welding portion with the insertion depth of the rotary tool (6) maintained, so that the rotary tool (6) is inserted into the metal plates from the edge surface (24) of the welding portion with the position control maintained to start the friction stir welding, and thereafter, the tool is moved until the friction stir welding is ended, while maintaining the insertion position thereof by position control with respect to the thickness direction of the metal plates; and

the other rotary tool (5) is moved to a planned insertion depth by position control in the thickness direction of the metal plates (1, 2) prior to a start of friction stir welding as with the rotary tool (6), then the tool is moved by position control in a traveling direction thereof from the edge surface (24) of the welding portion with the insertion depth of the rotary tool (5) maintained, so that the rotary tool (5) is inserted into the metal plates from the edge surface (24) of the welding portion with the position control in the thickness direction of the metal plates (1, 2) maintained to start the friction stir welding; and after the start of the friction stir welding, the rotary tool (5) is moved synchronously with the feed position of the one rotary tool (6), while during the movement of the rotary tool (5), constant load control is carried out that controls the insertion position of the tool (5) such that a load applied to the rotary tool is maintained at a predetermined value; and then, before the rotary tool (5) reaches a joining finishing end at which the friction stir welding is ended, the constant load control is switched to the position control that retains the insertion position of the tool (5) at the time when the rotary tool (5) reaches the joining finishing end, and thereafter the tool is allowed to pass through the welding finishing end to finish the friction stir welding.

21. The both-side friction stir welding apparatus according to any one of claims 14 to 19, further comprising a control device (83) that controls the pressing and clearance adjusting devices (55, 56) and the moving device (57, 58) such that:

the upper and lower rotary tools (5, 6) of the upper and lower friction stirring devices (3, 4) are each moved to a planned insertion depth by position control in a thickness direction of the metal plates (1, 2) prior to a start of friction stir welding, then the tools are moved by position control in a traveling direction thereof from an edge surface (24) of the welding portion with the insertion depth of the rotary tool (5, 6) maintained, so that the rotary tools (5, 6) are inserted into the metal plates from the edge surface (24) of the welding portion with the position control maintained to start the friction stir welding, and after the start of the friction stir welding, constant load control is carried out that controls the insertion position of the rotary tools (5, 6) such that a load applied to each of the rotary tools is maintained at a predetermined value, and then before the rotary tools (5, 6) reach a welding finishing end at which the friction stir welding is ended, the constant load control is switched to the position control that retains the insertion position of the rotary tools (5, 6) at the time when the rotary tools (5, 6) reach the joining finishing end, and thereafter the tools are allowed to pass through the welding finishing end to finish the friction stir welding.

22. A cold-rolling system comprising the both-side friction stir welding apparatus according to any one of claims 14 to 21.

**Patentansprüche**

1. Beidseitiges Reibrührschweißverfahren zum Verbinden von zwei Metallplatten (1, 2) miteinander, wobei ein oberes und unteres Drehwerkzeug (5, 6), von denen jedes einen Werkzeugkörper (5a, 5b), eine Sonde (13a, 13b), die an einem distalen Ende des Werkzeugkörpers (5a, 5b) gebildet ist und einen Durchmesser hat, der kleiner ist als der des distalen Endes des Werkzeugkörpers, und eine Schulter (5b, 6b), die um einen Abschnitt des distalen Endes des Werkzeugkörpers gebildet ist, an dem die Sonde gebildet ist, aufweist, in einen Stoß- oder Läppabschnitt (J) eingesetzt werden, der als ein Schweißabschnitt zwischen den zwei Metallplatten gebildet ist, jeweils von einer vorderen Flächenseite und einer hinteren Flächenseite des Stoßabschnitts, während das obere und untere Drehwerkzeug gedreht werden, um den Stoßabschnitt durch Nutzen von Reibungswärme, die durch die Drehung der Werkzeuge erzeugt wird, durch Reibung zu rühren, wodurch die zwei Metallplatten geschweißt werden, **dadurch gekennzeichnet, dass** das Verfahren Folgendes umfasst:

Greifen einer vorderen und hinteren Fläche der Metallplatten (1, 2) mit jeweils einer ersten und zweiten Greifvorrichtung (7, 8), wobei die Metallplatten (1, 2) jeweils eine Dicke haben, die kleiner ist als ein Durchmesser jeder der Schultern (5b, 6b) des oberen und unteren Drehwerkzeugs (5, 6), wobei die erste und zweite Greifvorrichtung (7, 8) angeordnet sind, um das obere und untere Drehwerkzeug (5, 6) in den gegenüberliegenden Seiten davon und voneinander in einem Abstand beabstandet, der nicht kleiner ist als 1,5 mal, jedoch nicht größer ist als 5,0 mal die Durchmesser der Werkzeugkörper (5a, 5b), sandwichartig zu umgeben,

Anordnen des oberen und unteren Drehwerkzeugs in gegenüberliegender Beziehung jeweils in der vorderen Flächenseite und der hinteren Flächenseite des Stoß- oder Läppabschnitts (J) der zwei Metallplatten, Bewegen des oberen und unteren Drehwerkzeugs in eine Richtung, in der sich das obere und untere Drehwerkzeug einander annähern, und Schaffen eines vorbestimmten Abstands ($\delta$), der mit einem Verhältnis festgelegt ist, das nicht weniger als 1 %, jedoch nicht mehr als 50 % der Dicke des Schweißabschnitts (J) der zwei Metallplatten (1, 2) beträgt, zwischen distalen Enden der Sonden (13a, 13b) des oberen und unteren Drehwerkzeugs, während die Schultern (5b, 6b) davon gegen die vordere Flächenseite und die hintere Flächenseite des Stoß- oder Läppabschnitts gedrückt werden, und

Bewegen, in diesem Zustand, des oberen und unteren Drehwerkzeugs entlang des Stoß- oder Läppabschnitts, während die Drehwerkzeuge gedreht werden, wodurch das Reibrührschweißen durchgeführt wird.

2. Beidseitiges Reibrührschweißverfahren nach Anspruch 1, wobei:

das obere und untere Drehwerkzeug (5, 6) derart angeordnet sind, dass die Achsen (14) davon in eine Richtung geneigt sind, in die sich die jeweiligen Sonden (13a, 13b) vor den anderen Abschnitten der Drehwerkzeuge in Bezug auf eine Bewegungsrichtung des oberen und unteren Drehwerkzeugs bewegen.

3. Beidseitiges Reibrührschweißverfahren nach Anspruch 1, wobei:

das obere und untere Drehwerkzeug (5, 6) in entgegengesetzte Richtungen in der vorderen Flächenseite und der hinteren Flächenseite des Schweißabschnitts gedreht werden.

4. Beidseitiges Reibrührschweißverfahren nach einem der Ansprüche 1 bis 3, wobei:

die jeweiligen Schultern (5b, 6b) des oberen und unteren Drehwerkzeugs (5, 6) mit dem gleichen Durchmesser hergestellt sind.

5. Beidseitiges Reibrührschweißverfahren nach einem der Ansprüche 2 bis 4, wobei:

die Neigungswinkel der Achsen (14) des oberen und unteren Drehwerkzeugs (5, 6) mit Winkeln festgelegt sind, die 0° überschreiten, jedoch nicht größer als 3° sind, wenn die Dicke der Metallplatten (1, 2) 2 mm oder weniger beträgt.

6. Beidseitiges Reibrührschweißverfahren nach einem der Ansprüche 2 bis 5, wobei:

die Neigungswinkel der Achsen (14) des oberen und unteren Drehwerkzeugs (5, 6) in Bezug zueinander gleich festgelegt sind.

7. Beidseitiges Reibrührschweißverfahren nach einem der Ansprüche 1 bis 6, wobei:

das obere und untere Drehwerkzeug (5, 6) gegen den Schweißabschnitt (J) der zwei Metallplatten (1, 2) jeweils von der vorderen Flächenseite und der hinteren Flächenseite des Schweißabschnitts gedrückt werden, um die gleichen Druckkräfte auf die vordere Flächenseite und die hintere Flächenseite aufzubringen.

8. Beidseitiges Reibrührschweißverfahren nach einem der Ansprüche 1 und 2 bis 7, wobei:

der Schweißabschnitt zwischen den zwei Metallplatten (1, 2) der Stoßabschnitt (J) ist und, wenn die zwei Metallplatten (1, 2) hinsichtlich der Dicke voneinander abweichen, die zwei Metallplatten mit der ersten und zweiten Greifvorrichtung (7, 8) derart gegriffen werden, dass kein abgestufter Abschnitt an dem Schweißabschnitt in einer von der vorderen und hinteren Flächenseite der zwei Metallplatten gebildet wird, und eines von dem oberen und unteren Drehwerkzeug (5 oder 6), das an einer abgestuften Flächenseite angeordnet ist, in eine Richtung derart gedreht wird, dass die dünnere Metallplattenseite an einer vorrückenden Seite positioniert ist, während das andere Drehwerkzeug, das an der nicht abgestuften Flächenseite angeordnet ist, in eine Richtung gedreht wird, die der Drehrichtung des Drehwerkzeugs, das in der abgestuften Flächenseite angeordnet ist, entgegengesetzt ist.

9. Beidseitiges Reibrührschweißverfahren nach einem der Ansprüche 1 und 2 bis 7, wobei:

der Schweißabschnitt zwischen den zwei Metallplatten (1, 2) der Stoßabschnitt (J) ist und, wenn die zwei Metallplatten (1, 2) hinsichtlich der Dicke voneinander abweichen, die zwei Metallplatten mit der ersten und zweiten Greifvorrichtung (7, 8) derart gegriffen werden, dass die abgestuften Abschnitte in der vorderen und hinteren Flächenseite der zwei Metallplatten gleichförmig sind, und das obere und untere Drehwerkzeug (5, 6) in die gleiche Richtung derart gedreht werden, dass die dünneren Seiten der Metallplatten an einer vorrückenden Seite positioniert sind.

10. Beidseitiges Reibrührschweißverfahren nach einem der Ansprüche 1 bis 9, wobei:

ein Drehwerkzeug (6) des oberen und unteren Drehwerkzeugs (5, 6) in eine geplante Einsetztiefe durch eine Positionssteuerung in einer Dickenrichtung der Metallplatten (1, 2) bewegt wird, bevor ein Reibrührschweißen begonnen wird, das Werkzeug dann durch eine Positionssteuerung in eine Bewegungsrichtung des Werkzeugs von einer Randfläche (24) des Schweißabschnitts bewegt wird, wobei die Einsetztiefe des Drehwerkzeugs (6) aufrechterhalten wird, so dass das Drehwerkzeug (6) in die Metallplatten von der Randfläche (24) des Schweißabschnitts eingesetzt wird, wobei die Positionsteuerung aufrechterhalten wird, um das Reibrührschweißen zu beginnen, und danach das Werkzeug bewegt wird, bis das Reibrührschweißen beendet ist, während die Einsetzposition davon durch eine Positionssteuerung in Bezug auf die Dickenrichtung der Metallplatten aufrechterhalten wird, und das andere Drehwerkzeug (5) wie das Drehwerkzeug (6) in eine geplante Einsetztiefe durch eine Positionssteuerung in der Dickenrichtung der Metallplatten (1, 2) bewegt wird, bevor ein Reibrührschweißen begonnen wird, das Werkzeug dann durch eine Positionssteuerung von der Randfläche (24) des Schweißabschnitts aus in eine Bewegungsrichtung desselben bewegt wird, wobei die Einsetztiefe des Drehwerkzeugs (5) aufrechterhalten wird, so dass das Drehwerkzeug (5) in die Metallplatten von der Randfläche (24) des Schweißabschnitts eingesetzt wird, wobei die Positionssteuerung in der Dickenrichtung der Metallplatten (1, 2) aufrechterhalten wird, um das Reibrührschweißen zu beginnen, und nach dem Beginn des Reibrührschweißens das Drehwerkzeug (5) synchron zu der Zuführposition des einen Drehwerkzeugs (6) bewegt wird, während bei der Bewegung des Drehwerkzeugs (5) eine konstante Laststeuerung ausgeführt wird, die die Einsetzposition des Werkzeugs (5) derart steuert, dass eine Last, die auf das Drehwerkzeug aufgebracht wird, auf einem vorbestimmten Wert gehalten wird, und dann, bevor das Drehwerkzeug (5) ein Verbindungsabschlussende erreicht, an dem das Reibrührschweißen beendet wird, die konstante Laststeuerung zu der Positionssteuerung umgeschaltet wird, die die Einsetzposition des Werkzeugs (5) zur gleichen Zeit beibehält, wenn das Drehwerkzeug (5) das Verbindungsabschlussende erreicht, und danach dem Werkzeug ermöglicht wird, durch das Verbindungsabschlussende zu verlaufen, um das Reibrührschweißen abzuschließen.

11. Beidseitiges Reibrührschweißverfahren nach einem der Ansprüche 1 bis 9, wobei:

das obere und untere Drehwerkzeug (5, 6) jeweils in eine geplante Einsetztiefe durch eine Positionssteuerung in einer Dickenrichtung der Metallplatten (1, 2) bewegt werden, bevor ein Reibrührschweißen begonnen wird, die Werkzeuge dann durch eine Positionssteuerung in eine Bewegungsrichtung davon von einer Randfläche (24) des Schweißabschnitts bewegt werden, wobei die Einsetztiefe des Drehwerkzeugs (5, 6) aufrechterhalten wird, so dass die Drehwerkzeuge (5, 6) in die Metallplatten von der Randfläche (24) des Schweißabschnitts eingesetzt werden, wobei die Positionssteuerung aufrechterhalten wird, um das Reibrührschweißen zu beginnen, und nach dem Beginn des Reibrührschweißens eine konstante Laststeuerung ausgeführt wird, die die Einsetzposition der Drehwerkzeuge (5, 6) derart steuert, dass eine Last, die auf die Drehwerkzeuge aufgebracht wird, auf einem vorbestimmten Wert gehalten wird, und dann, bevor die Drehwerkzeuge (5, 6) ein Verbindungsabschlussende erreichen, an dem das Reibrührschweißen beendet wird, die konstante Laststeuerung zu der Positionssteuerung umgeschaltet wird, die die Einsetzposition der Drehwerkzeuge (5, 6) zur gleichen Zeit beibehält, wenn die Drehwerkzeuge (5, 6) das Verbindungsabschlussende erreichen, und danach den Werkzeugen ermöglicht wird, durch das Verbindungsabschlussende zu verlaufen, um das Reibrührschweißen abzuschließen.

12. Beidseitiges Reibrührschweißverfahren nach einem der Ansprüche 1 bis 11, wobei:

   das obere und untere Drehwerkzeug (5, 6) jeweils aus einer Hartmetalllegierung aus gesintertem Wolframcarbid, einer Wolframlegierung oder dergleichen hergestellt sind und
   die zwei Metallplatten (1, 2) aus einem Material mit hoher Schmelztemperatur hergestellt sind, dessen Schmelztemperatur nicht weniger als 1.000°C beträgt.

13. Metallplattenverbindungsverfahren in einem Kaltwalzsystem, wobei das Verfahren den Schritt zum Verbinden von Metallplatten (S) umfasst, die zum Kaltwalzen unter Verwendung des beidseitigen Reibrührschweißverfahrens nach einem der Ansprüche 1 bis 12 geliefert werden.

14. Beidseitige Reibrührschweißeinrichtung zum Verbinden von zwei Metallplatten (1, 2) miteinander, wobei ein oberes und unteres Drehwerkzeug (5, 6), von denen jedes einen Werkzeugkörper (5a, 5b), eine Sonde (13a, 13b), die an einem distalen Ende des Werkzeugkörpers (5a, 5b) gebildet ist und einen Durchmesser hat, der kleiner ist als der des distalen Endes des Werkzeugkörpers, und eine Schulter (5b, 6b), die um einen Abschnitt des distalen Endes des Werkzeugkörpers gebildet ist, an dem die Sonde gebildet ist, aufweist, in einen Stoß- oder Läppabschnitt (J) eingesetzt werden, der als ein Schweißabschnitt zwischen den zwei Metallplatten gebildet ist, jeweils von einer vorderen Flächenseite und einer hinteren Flächenseite des Stoßabschnitts, während das obere und untere Drehwerkzeug gedreht werden, um den Stoßabschnitt durch Nutzen von Reibungswärme, die durch die Drehung der Werkzeuge erzeugt wird, durch Reibung zu rühren, wodurch die zwei Metallplatten geschweißt werden, **dadurch gekennzeichnet, dass** die Einrichtung Folgendes umfasst:

   eine erste und zweite Greifvorrichtung zum Greifen jeweils einer vorderen und hinteren Fläche der Metallplatten (1, 2), wobei die Metallplatten (1, 2) jeweils eine Dicke haben, die kleiner ist als ein Durchmesser jeder der Schultern (5b, 6b) des oberen und unteren Drehwerkzeugs (5, 6), wobei die erste und zweite Greifvorrichtung (7, 8) angeordnet sind, um das obere und untere Drehwerkzeug (5, 6) in den gegenüberliegenden Seiten davon und voneinander in einem Abstand beabstandet, der nicht kleiner ist als 1,5 mal, jedoch nicht größer ist als 5,0 mal die Durchmesser der Werkzeugkörper (5a, 5b), sandwichartig zu umgeben,
   eine obere Reibrührvorrichtung (3) und eine untere Reibrührvorrichtung (4), die jeweils das obere und untere Drehwerkzeug einzeln haben, wobei das obere und untere Drehwerkzeug in gegenüberliegender Beziehung jeweils in der vorderen Flächenseite und der hinteren Flächenseite des Stoß- oder Läppabschnitts (J) der zwei Metallplatten angeordnet sind,
   Druck- und Abstandseinstellvorrichtungen (55, 56) zum Bewegen des oberen und unteren Drehwerkzeugs der oberen und unteren Reibrührvorrichtung in eine Richtung, in der sich das obere und untere Drehwerkzeug einander annähern, und Schaffen eines vorbestimmten Abstands (δ), der mit einem Verhältnis festgelegt ist, das nicht weniger als 1 %, jedoch nicht mehr als 50 % der Dicke des Schweißabschnitts (J) der zwei Metallplatten (1, 2) beträgt, zwischen distalen Enden der Sonden (13a, 13b) des oberen und unteren Drehwerkzeugs, während die Schultern (5b, 6b) davon gegen die vordere Flächenseite und die hintere Flächenseite des Stoß- oder Läppabschnitts gedrückt werden, und
   Bewegungsvorrichtung (57, 58) zum Bewegen des oberen und unteren Drehwerkzeugs der oberen und unteren Reibrührvorrichtung entlang des Stoß- oder Läppabschnitts (J).

15. Beidseitige Reibrührschweißeinrichtung nach Anspruch 14, ferner umfassend eine obere und untere Neigungstragvorrichtung (76a, 76b) zum Tragen des oberen und unteren Drehwerkzeugs (5, 6) der oberen und unteren Reibrührvorrichtung (3, 4) derart, dass die Achsen (14) des oberen und unteren Drehwerkzeugs (5, 6) in eine Richtung geneigt sind, in die sich die jeweiligen Sonden (13a, 13b) vor den anderen Abschnitten der Drehwerkzeuge in Bezug auf eine Bewegungsrichtung des oberen und unteren Drehwerkzeugs bewegen.

16. Beidseitige Reibrührschweißeinrichtung nach einem der Ansprüche 14 bis 15, wobei:

   die Druck- und Abstandseinstellvorrichtungen (55, 56) den Abstand (δ) zwischen den distalen Enden der Sonden (13a, 13b) des oberen und unteren Drehwerkzeugs (5, 6) einstellen, um innerhalb eines Verhältnisses zu bleiben, das nicht weniger als 1 %, jedoch nicht mehr als 50 % der Dicke des Schweißabschnitts (J) der zwei Metallplatten (1, 2) beträgt.

17. Beidseitige Reibrührschweißeinrichtung nach einem der Ansprüche 14 bis 16, wobei:

die erste und zweite Greifvorrichtung (7, 8) derart angeordnet sind, dass ein Abstand dazwischen festgelegt ist, um nicht weniger als 1,5 mal, jedoch nicht mehr als 5,0 mal die Durchmesser der Werkzeugkörper (5a, 5b) zu betragen.

18. Beidseitige Reibrührschweißeinrichtung nach einem der Ansprüche 14 bis 17, wobei:

die obere und untere Reibrührvorrichtung (3, 4) das jeweilige obere und untere Drehwerkzeug (5, 6) in entgegengesetzte Richtungen in der vorderen Flächenseite und der hinteren Flächenseite des Schweißabschnitts drehen.

19. Beidseitige Reibrührschweißeinrichtung nach einem der Ansprüche 15 bis 18, wobei:

die Neigungstragvorrichtungen (76a, 76b) die Neigungswinkel der Achsen (14) des oberen und unteren Drehwerkzeugs (5, 6) der oberen und unteren Reibrührvorrichtung (3, 4) steuern, um Winkel aufzuweisen, die 0° überschreiten, jedoch nicht größer als 3° sind, wenn die Dicke der Metallplatten (1, 2) 2 mm oder weniger beträgt.

20. Beidseitige Reibrührschweißeinrichtung nach einem der Ansprüche 14 bis 19, ferner umfassend eine Steuervorrichtung (83), die die Druck- und Abstandeinstellvorrichtungen (55, 56) und die Bewegungsvorrichtung (57, 58) derart steuert, dass:

ein Drehwerkzeug (6) des oberen und unteren Drehwerkzeugs (5, 6) der oberen und unteren Reibrührvorrichtung (3, 4) in eine geplante Einsetztiefe durch eine Positionssteuerung in einer Dickenrichtung der Metallplatten (1, 2) bewegt wird, bevor ein Reibrührschweißen begonnen wird, das Werkzeug dann durch eine Positionssteuerung in eine Bewegungsrichtung des Werkzeugs von einer Randfläche (24) des Schweißabschnitts aus bewegt wird, wobei die Einsetztiefe des Drehwerkzeugs (6) aufrechterhalten wird, so dass das Drehwerkzeug (6) in die Metallplatten von der Randfläche (24) des Schweißabschnitts eingesetzt wird, wobei die Positionsteuerung aufrechterhalten wird, um das Reibrührschweißen zu beginnen, und danach das Werkzeug bewegt wird, bis das Reibrührschweißen beendet ist, während die Einsetzposition desselben durch eine Positionssteuerung in Bezug auf die Dickenrichtung der Metallplatten aufrechterhalten wird, und
das andere Drehwerkzeug (5) wie das Drehwerkzeug (6) in eine geplante Einsetztiefe durch eine Positionssteuerung in der Dickenrichtung der Metallplatten (1, 2) bewegt wird, bevor ein Reibrührschweißen begonnen wird, das Werkzeug dann durch eine Positionssteuerung in eine Bewegungsrichtung desselben von der Randfläche (24) des Schweißabschnitts aus bewegt wird, wobei die Einsetztiefe des Drehwerkzeugs (5) aufrechterhalten wird, so dass das Drehwerkzeug (5) in die Metallplatten von der Randfläche (24) des Schweißabschnitts aus eingesetzt wird, wobei die Positionssteuerung in der Dickenrichtung der Metallplatten (1, 2) aufrechterhalten wird, um das Reibrührschweißen zu beginnen, und nach dem Beginn des Reibrührschweißens das Drehwerkzeug (5) synchron zu der Zuführposition des Drehwerkzeugs (6) bewegt wird, während bei der Bewegung des Drehwerkzeugs (5) eine konstante Laststeuerung ausgeführt wird, die die Einsetzposition des Werkzeugs (5) derart steuert, dass eine Last, die auf das Drehwerkzeug aufgebracht wird, auf einem vorbestimmten Wert gehalten wird, und dann, bevor das Drehwerkzeug (5) ein Verbindungsabschlussende erreicht, an dem das Reibrührschweißen beendet wird, die konstante Laststeuerung zu der Positionssteuerung umgeschaltet wird, die die Einsetzposition des Werkzeugs (5) zur gleichen Zeit beibehält, wenn das Drehwerkzeug (5) das Verbindungsabschlussende erreicht, und danach dem Werkzeug ermöglicht wird, durch das Schweißabschlussende zu verlaufen, um das Reibrührschweißen abzuschließen.

21. Beidseitige Reibrührschweißeinrichtung nach einem der Ansprüche 14 bis 19, ferner umfassend eine Steuervorrichtung (83), die die Druck- und Abstandeinstellvorrichtungen (55, 56) und die Bewegungsvorrichtung (57, 58) derart steuert, dass:

das obere und untere Drehwerkzeug (5, 6) der oberen und unteren Reibrührvorrichtung (3, 4) jeweils in eine geplante Einsetztiefe durch eine Positionssteuerung in einer Dickenrichtung der Metallplatten (1, 2) bewegt werden, bevor ein Reibrührschweißen begonnen wird, das Werkzeug dann durch eine Positionssteuerung in eine Bewegungsrichtung desselben von einer Randfläche (24) des Schweißabschnitts aus bewegt wird, wobei die Einsetztiefe des Drehwerkzeugs (5, 6) aufrechterhalten wird, so dass die Drehwerkzeuge (5, 6) in die Metallplatten von der Randfläche (24) des Schweißabschnitts aus eingesetzt werden, wobei die Positionssteuerung aufrechterhalten wird, um das Reibrührschweißen zu beginnen, und nach dem Beginn des Reibrührschweißens eine konstante Laststeuerung ausgeführt wird, die die Einsetzposition der Drehwerkzeuge (5, 6) derart steuert, dass eine Last, die auf die Drehwerkzeuge aufgebracht wird, auf einem vorbestimmten Wert gehalten wird, und dann, bevor die Drehwerkzeuge (5, 6) ein Schweißabschlussende erreichen, an dem das Reibrührschweißen beendet wird, die konstante Laststeuerung zu der Positionssteuerung umgeschaltet wird, die zu der Zeit, zu der die Drehwerkzeuge (5, 6) das Verbindungsabschlussende erreichen, die Einsetzposition der Drehwerkzeuge (5, 6) beibehält, und danach den Werkzeugen ermöglicht wird, durch das Schweißabschlussende zu verlaufen, um das Reibrührschweißen abzuschließen.

**22.** Kaltwalzsystem, umfassend die beidseitige Reibrührschweißeinrichtung nach einem der Ansprüche 14 bis 21.

## Revendications

**1.** Procédé de soudage par friction-malaxage sur deux faces pour l'assemblage de deux plaques métalliques (1, 2), dans lequel des outils rotatifs supérieur et inférieur (5, 6) comprennent respectivement un corps d'outil (5a, 5b), une sonde (13a, 13b) formée à une extrémité distale du corps d'outil (5a, 5b) et présentant un diamètre inférieur à celui de l'extrémité distale du corps d'outil et une épaule (5b, 6b) formée autour d'une partie de l'extrémité distale du corps d'outil sur laquelle est formée la sonde sont insérées dans une partie d'aboutement ou de rodage (J) formée comme une partie de soudage entre les deux plaques métalliques, à partir d'un côté de surface avant et d'un côté de surface arrière de la partie d'aboutement, respectivement, tandis que les outils rotatifs supérieur et inférieur sont mis en rotation pour malaxer par friction la partie d'aboutement au moyen d'une chaleur de friction générée par la rotation des outils pour ainsi souder les deux plaques métalliques ;
**caractérisé en ce que** le procédé comprend :

la préhension des surfaces avant et arrière des plaques métalliques (1, 2) avec des premier et deuxième dispositifs de préhension (7, 8), respectivement, les plaques métalliques (1, 2) présentant respectivement une épaisseur inférieure à un diamètre de chacune des épaules (5b, 6b) des outils rotatifs supérieur et inférieur (5, 6), les premier et deuxième dispositifs de préhension (7, 8) étant disposés de manière à prendre en sandwich les outils rotatifs supérieur et inférieur (5, 6) au niveau des deux faces de ceux-ci et espacés l'un de l'autre d'une distance supérieure à 1,5 fois mais inférieure à 5 fois les diamètres des corps d'outil (5a, 5b) ;
la disposition des outils rotatifs supérieur et inférieur en relation opposée au niveau du côté de surface avant et du côté de la surface arrière de la partie d'aboutement ou de rodage (J) des deux plaques métalliques, respectivement, le déplacement des outils rotatifs supérieur et inférieur dans une direction dans laquelle les outils rotatifs supérieur et inférieur se rapprochent l'un de l'autre, et la création d'un jeu prédéterminé ($\delta$) fixé de manière à être un rapport supérieur à 1% mais inférieur à 50% de l'épaisseur de la partie de soudage (J) des deux plaques métalliques (1, 2), entre des extrémités distales des deux sondes (13a, 13b) des outils rotatifs supérieur et inférieur, tout en appuyant les épaules (5b, 6b) de ceux-ci contre le côté de surface avant et le côté de surface arrière de la partie d'aboutement ou de rodage; et
le déplacement, dans cet état, des outils rotatifs supérieur et inférieur le long de la partie d'aboutement ou de rodage tout en faisant tourner les outils rotatifs pour ainsi exécuter le soudage par friction malaxage.

**2.** Procédé de soudage par friction-malaxage sur deux faces selon la revendication 1, dans lequel :

les outils rotatifs supérieur et inférieur (5, 6) sont disposés de telle façon que les axes (14) de ceux-ci sont inclinés dans une direction dans laquelle les sondes (13a, 13b) respectives se déplacent à l'avant des autres parties des outils rotatifs par rapport à une direction de marche des outils rotatifs supérieur et inférieur.

**3.** Procédé de soudage par friction-malaxage sur deux faces selon la revendication 1, dans lequel :

les outils rotatifs supérieur et inférieur (5, 6) tournent dans des directions opposées au niveau du côté de surface avant et du côté de surface arrière de la partie de soudage.

**4.** Procédé de soudage par friction-malaxage sur deux faces selon l'une quelconque des revendications 1 à 3, dans lequel :

les épaules (5b, 6b) respectives des outils rotatifs supérieur et inférieur (5, 6) présentent le même diamètre.

**5.** Procédé de soudage par friction-malaxage sur deux faces selon l'une quelconque des revendications 2 à 4, dans lequel :

les angles d'inclinaison des axes (14) des outils rotatifs supérieur et inférieur (5, 6) sont fixés de manière à être des angles supérieurs à 0° mais inférieurs à 3°, lorsque l'épaisseur des plaques métalliques (1, 2) mesure 2 mm ou moins.

**6.** Procédé de soudage par friction-malaxage sur deux faces selon l'une quelconque des revendications 2 à 5, dans lequel :

les angles d'inclinaison des axes (14) des outils rotatifs supérieur et inférieur (5, 6) sont fixés de manière à être identiques l'un par rapport à l'autre.

**7.** Procédé de soudage par friction-malaxage sur deux faces selon l'une quelconque des revendications 1 à 6, dans lequel :

les outils rotatifs supérieur et inférieur (5, 6) sont pressés contre la partie de soudage (J) des deux plaques métalliques (1, 2) à partir du côté de surface avant et du côté de surface arrière de la partie de soudage, respectivement, de manière à appliquer les mêmes forces de pression au côté de surface avant et au côté de surface arrière.

**8.** Procédé de soudage par friction-malaxage sur deux faces selon l'une quelconque parmi la revendication 1 et les revendications 2 à 7, dans lequel :

la partie de soudage entre les deux plaques métalliques (1, 2) est la partie d'aboutement (J) et lorsque les deux plaques métalliques (1, 2) présentent des épaisseurs différentes, les deux plaques métalliques sont saisies par les premier et deuxième dispositifs de préhension (7, 8) de telle façon qu'aucune partie étagée n'est formée au niveau de la partie de soudage sur l'un parmi les côtés de surface avant et arrière des deux plaques métalliques ; et

l'un parmi les outils rotatifs supérieur et inférieur (5 ou 6) disposé sur un côté de surface étagée est mis en rotation dans une direction dans laquelle le côté de plaque métallique le plus fin est positionné sur un côté d'avancement, tandis que l'autre outil rotatif disposé sur un côté de surface non étagée est mis en rotation dans une direction opposée à la direction de rotation de l'outil rotatif disposé sur le côté de surface étagée.

**9.** Procédé de soudage par friction-malaxage sur deux faces selon l'une quelconque parmi la revendication 1 et les revendications 2 à 7, dans lequel :

la partie de soudage entre les deux plaques métalliques (1, 2) est la partie d'aboutement (J) et lorsque les deux plaques métalliques (1, 2) présentent des épaisseurs différentes, les deux plaques métalliques sont saisies par les premier et deuxième dispositifs de préhension (7, 8) de telle façon que les parties étagées dans les côtés de surface avant et arrière des plaques métalliques sont uniformes ; et

les outils rotatifs supérieur et inférieur (5, 6) sont mis en rotation dans la même direction de telle façon que les côtés les plus fins des plaques métalliques sont positionnés sur un côté d'avancement.

**10.** Procédé de soudage par friction-malaxage sur deux faces selon l'une quelconque des revendications 1 à 9, dans lequel :

un outil rotatif (6) parmi les outils rotatifs supérieur et inférieur (5, 6) est déplacé à une profondeur d'insertion prévue en contrôlant la position dans une direction d'épaisseur des plaques métalliques (1, 2) avant le début du soudage par friction-malaxage, puis l'outil est déplacé en contrôlant la position dans une direction de déplacement de l'outil à partir d'une surface de bord (24) de la partie de soudage tout en maintenant la profondeur d'insertion de l'outil rotatif (6), de telle façon que l'outil rotatif (6) est inséré dans les plaques métalliques à partir de la surface de bord (24) de la partie de soudage tout en maintenant le contrôle de position pour démarrer le soudage par friction-malaxage, puis l'outil est déplacé jusqu'à la fin du soudage par friction-malaxage, tout en maintenant la profondeur d'insertion de celui-ci en contrôlant la position par rapport à la direction d'épaisseur des plaques métalliques ; et

l'autre outil rotatif (5) est déplacé à une profondeur d'insertion prévue des plaques métalliques (1, 2) avant le début du soudage par friction-malaxage de la même manière que l'outil rotatif (6), puis l'outil est déplacé en contrôlant la position dans une direction de déplacement de celui-ci à partir d'une surface de bord (24) de la partie de soudage tout en maintenant la profondeur d'insertion de l'outil rotatif (5), de telle façon que l'outil rotatif (5) est inséré dans les plaques métalliques à partir de la surface de bord (24) de la partie de soudage tout en maintenant le contrôle de position dans la profondeur d'insertion des plaques métalliques (1, 2) pour démarrer le soudage par friction-malaxage ; et après le début du soudage par friction-malaxage, l'outil rotatif (5) est déplacé de façon synchrone avec la position d'alimentation du premier outil rotatif (6), sachant que pendant le déplacement de l'outil rotatif (5), un contrôle de charge constante est réalisé pour contrôler la profondeur d'insertion de l'outil (5) de telle façon qu'une charge appliquée à l'outil rotatif est maintenue à une valeur prédéterminée ; puis, avant la fin du soudage par friction-malaxage, le contrôle de charge constante est commuté vers le contrôle de position retenant la position d'insertion de l'outil (5) au moment où l'outil rotatif (5) atteint l'extrémité de finition d'assemblage, puis l'outil peut passer à travers l'extrémité de finition d'assemblage pour terminer le soudage par friction-malaxage.

11. Procédé de soudage par friction-malaxage sur deux faces selon l'une quelconque des revendications 1 à 9, dans lequel :

les outils rotatifs supérieur et inférieur (5, 6) sont déplacés respectivement à une profondeur d'insertion prévue en contrôlant la position dans une direction d'épaisseur des plaques métalliques (1, 2) avant le début d'un soudage par friction-malaxage, puis les outils sont déplacés en contrôlant la position dans une direction de déplacement de ceux-ci à partir d'une surface de bord (24) de la partie de soudage tout en maintenant la profondeur d'insertion de l'outil rotatif (5, 6), de telle façon que les outils rotatifs supérieur et inférieur (5, 6) sont insérés dans les plaques métalliques à partir de la surface de bord (24) de la partie de soudage tout en maintenant le contrôle de position pour démarrer le soudage par friction-malaxage, et après le début du soudage par friction-malaxage, un contrôle de charge constante est réalisé pour contrôler la profondeur d'insertion des outils rotatifs supérieur et inférieur (5, 6) de manière à maintenir une charge appliquée à chacun des outils rotatifs supérieur et inférieur à une valeur prédéterminée, puis, avant que les outils rotatifs supérieur et inférieur (5, 6) atteignent une extrémité de finition d'assemblage à laquelle le soudage par friction-malaxage est terminé, le contrôle de charge constante est commuté vers le contrôle de position maintenant la position d'insertion des outils rotatifs supérieur et inférieur (5, 6) à un moment où les outils rotatifs supérieur et inférieur (5, 6) atteignent l'extrémité de finition d'assemblage, puis les outils peuvent traverser l'extrémité de finition d'assemblage pour terminer le soudage par friction-malaxage.

12. Procédé de soudage par friction-malaxage sur deux faces selon l'une quelconque des revendications 1 à 11, dans lequel :

les outils rotatifs supérieur et inférieur (5, 6) sont respectivement constitués d'un alliage de carbure de tungstène fritté, d'un alliage de tungstène ou similaire ; et
les deux plaques métalliques (1, 2) sont constituées d'un matériau à haute température de fusion, dont la température de fusion est supérieure à 1000°C.

13. Procédé d'assemblage de plaques métalliques dans un système de laminage à froid, le procédé comprenant l'étape d'assemblage de plaques métalliques (S) soumises au laminage à froid à l'aide du procédé de soudage par friction-malaxage sur deux faces selon l'une quelconque des revendications 1 à 12.

14. Dispositif de soudage par friction-malaxage sur deux faces pour l'assemblage de deux plaques métalliques (1, 2), dans lequel des outils rotatifs supérieur et inférieur (5, 6) comprenant respectivement un corps d'outil (5a, 5b), une sonde (13a, 13b) formée à une extrémité distale du corps d'outil (5a, 5b) et présentant un diamètre inférieur à celui de l'extrémité distale du corps d'outil et une épaule (5b, 6b) formée autour d'une partie de l'extrémité distale du corps d'outil sur laquelle est formée la sonde sont insérées dans une partie d'aboutement ou de rodage (J) formée comme une partie de soudage entre les deux plaques métalliques, à partir d'un côté de surface avant et d'un côté de surface arrière de la partie d'aboutement, respectivement, tandis que les outils rotatifs supérieur et inférieur sont mis en rotation pour malaxer par friction la partie d'aboutement au moyen d'une chaleur de friction générée par la rotation des outils pour ainsi souder les deux plaques métalliques ;
**caractérisé en ce que** le dispositif comprend :

des premier et deuxième dispositifs de préhension destinés à saisir des surfaces avant et arrière des plaques métalliques (1, 2), respectivement, les plaques métalliques (1, 2) présentant respectivement une épaisseur inférieure à un diamètre de chacune des épaules (5b, 6b) des outils rotatifs supérieur et inférieur (5, 6), les premier et deuxième dispositifs de préhension (7, 8) étant conçus pour prendre en sandwich les outils rotatifs supérieur et inférieur (5, 6) sur des côtés opposés de ceux-ci et espacés l'un de l'autre d'une distance supérieure à 1,5 fois mais inférieure à 5 fois les diamètres des corps d'outil (5a, 5b) ;

un dispositif de friction malaxage supérieur (3) et un dispositif de friction malaxage inférieur (4) comportant les outils rotatifs supérieur et inférieur un à un, respectivement, les outils rotatifs supérieur et inférieur étant disposés en relation opposée sur le côté de surface avant et le côté de surface arrière de la partie d'aboutement ou de rodage (J) des deux plaques métalliques, respectivement ;

des dispositifs de pression et de réglage de jeu (55, 56) destinés à déplacer les outils rotatifs supérieur et inférieur des dispositifs de friction malaxage supérieur et inférieur dans une direction dans laquelle les outils rotatifs supérieur et inférieur se rapprochent l'un de l'autre, et à créer un jeu prédéterminé ($\delta$) fixé de manière à être un rapport supérieur à 1% mais inférieur à 50% de l'épaisseur de la partie de soudage (J) des deux plaques métalliques (1, 2), entre des extrémités distales des deux sondes (13a, 13b) des outils rotatifs supérieur et inférieur, tout en appuyant les épaules (5b, 6b) de ceux-ci contre le côté de surface avant et le côté de surface arrière de la partie d'aboutement ou d'enveloppement ; et

un dispositif de déplacement (57, 58) destiné à déplacer les outils rotatifs supérieur et inférieur des dispositifs de friction malaxage supérieur et inférieur le long de la partie d'aboutement ou d'enveloppement (J).

15. Dispositif de soudage par friction-malaxage sur deux faces selon la revendication 14, comprenant en outre des dispositifs de support d'inclinaison supérieur et inférieur (76a, 76b) destinés à supporter les outils rotatifs supérieur et inférieur (5, 6) des dispositifs de friction malaxage supérieur et inférieur (3, 4) de manière à ce que les axes (14) des outils rotatifs supérieur et inférieur (5, 6) soient inclinés dans une direction dans laquelle les sondes (13a, 13b) respectives se déplacent à l'avant des autres parties des outils rotatifs par rapport à une direction de déplacement des outils rotatifs supérieur et inférieur.

16. Dispositif de soudage par friction-malaxage sur deux faces selon l'une quelconque des revendications 14 à 15, dans lequel :

les dispositifs de pression et de réglage de jeu (55, 56) permettent de régler le jeu ($\delta$) entre les extrémités distales des sondes (13a, 13b) des outils rotatifs supérieur et inférieur (5, 6) de manière à les maintenir dans un rapport supérieur à 1% mais inférieur à 50% de l'épaisseur de la partie de soudage (J) des deux plaques métalliques (1, 2).

17. Dispositif de soudage par friction-malaxage sur deux faces selon l'une quelconque des revendications 14 à 16, dans lequel :

les premier et deuxième dispositifs de préhension (7, 8) sont disposés de telle façon qu'une distance entre eux est fixée de manière à être supérieure à 1,5 fois mais inférieure à 5 fois les diamètres des corps d'outil (5a, 5b).

18. Dispositif de soudage par friction-malaxage sur deux faces selon l'une quelconque des revendications 14 à 17, dans lequel :

les dispositifs de friction malaxage supérieur et inférieur (3, 4) font tourner les outils rotatifs supérieur et inférieur (5, 6) respectifs dans des directions opposées sur le côté de surface avant et le côté de surface arrière de la partie de soudage.

19. Dispositif de soudage par friction-malaxage sur deux faces selon l'une quelconque des revendications 15 à 18, dans lequel :

les dispositifs de support d'inclinaison (76a, 76b) contrôlent les angles d'inclinaison des axes (14) des outils rotatifs supérieur et inférieur (5, 6) des dispositifs de friction malaxage supérieur et inférieur (3, 4) de manière à ce que ceux-ci soient des angles supérieurs à 0% mais inférieurs à 3% lorsque l'épaisseur des plaques métalliques (1, 2) mesure 2 mm ou moins.

20. Dispositif de soudage par friction-malaxage sur deux faces selon l'une quelconque des revendications 14 à 19, comprenant en outre un dispositif de contrôle (83) contrôlant les dispositifs de pression et de réglage de jeu (55, 56) et le dispositif de déplacement (57, 58) de telle façon que :

un outil rotatif (6) parmi les outils rotatifs supérieur et inférieur (5, 6) des dispositifs de friction malaxage supérieur

EP 2 474 382 B1

et inférieur (3, 4) est déplacé à une profondeur d'insertion prévue en contrôlant la position dans une direction d'épaisseur des plaques métalliques (1, 2) avant le début du soudage par friction-malaxage, puis l'outil est déplacé en contrôlant la position dans une direction de déplacement de l'outil à partir d'une surface de bord (24) de la partie de soudage tout en maintenant la profondeur d'insertion de l'outil rotatif (6), de telle façon que l'outil rotatif (6) est inséré dans les plaques métalliques à partir de la surface de bord (24) de la partie de soudage tout en maintenant le contrôle de position pour démarrer le soudage par friction-malaxage, puis l'outil est déplacé jusqu'à la fin du soudage par friction-malaxage, tout en maintenant la profondeur d'insertion de celui-ci en contrôlant la position par rapport à la direction d'épaisseur des plaques métalliques ; et

l'autre outil rotatif (5) est déplacé à une profondeur d'insertion prévue des plaques métalliques (1, 2) avant le début du soudage par friction-malaxage de la même manière que l'outil rotatif (6), puis l'outil est déplacé en contrôlant la position dans une direction de déplacement de celui-ci à partir d'une surface de bord (24) de la partie de soudage tout en maintenant la profondeur d'insertion de l'outil rotatif (5), de telle façon que l'outil rotatif (5) est inséré dans les plaques métalliques à partir de la surface de bord (24) de la partie de soudage tout en maintenant le contrôle de position dans la profondeur d'insertion des plaques métalliques (1, 2) pour démarrer le soudage par friction-malaxage ; et après le début du soudage par friction-malaxage, l'outil rotatif (5) est déplacé de façon synchrone avec la position d'alimentation du premier outil rotatif (6), sachant que pendant le déplacement de l'outil rotatif (5), un contrôle de charge constante est réalisé pour contrôler la profondeur d'insertion de l'outil (5) de telle façon qu'une charge appliquée à l'outil rotatif est maintenue à une valeur prédéterminée ; puis, avant que l'outil rotatif (5) atteigne une extrémité de finition d'assemblage à laquelle le soudage par friction-malaxage est terminé, le contrôle de charge constante est commuté vers le contrôle de position maintenant la position d'insertion de l'outil (5) au moment où l'outil rotatif (5) atteint l'extrémité de finition d'assemblage, puis l'outil peut passer à travers l'extrémité de finition d'assemblage pour terminer le soudage par friction-malaxage.

21. Dispositif de soudage par friction-malaxage sur deux faces selon l'une quelconque des revendications 14 à 19, comprenant en outre un dispositif de contrôle (83) contrôlant les dispositifs de pression et de réglage de jeu (55, 56) et le dispositif de déplacement (57, 58) de telle façon que :

les outils rotatifs supérieur et inférieur (5, 6) des dispositifs de friction malaxage supérieur et inférieur (3, 4) sont déplacés respectivement à une profondeur d'insertion prévue en contrôlant la position dans une direction d'épaisseur des plaques métalliques (1, 2) avant un démarrage du soudage par friction-malaxage, puis les outils sont déplacés en contrôlant la position dans une direction de déplacement de ceux-ci à partir d'une surface de bord (24) de la partie de soudage tout en maintenant la profondeur d'insertion de l'outil rotatif (5, 6), de telle façon que les outils rotatifs (5, 6) sont insérés dans les plaques métalliques à partir de la surface de bord (24) de la partie de soudage tout en maintenant le contrôle de position pour démarrer le soudage par friction-malaxage, et après le début du soudage par friction-malaxage, un contrôle de charge constante est réalisé pour contrôler la position d'insertion des outils rotatifs (5, 6) de manière à maintenir une charge appliquée à chacun des outils rotatifs à une valeur prédéterminée, puis, avant que les outils rotatifs (5, 6) atteignent une extrémité de finition d'assemblage à laquelle le soudage par friction-malaxage est terminé, le contrôle de charge constante est commuté vers le contrôle de position maintenant la position d'insertion des outils rotatifs (5, 6) au moment où les outils rotatifs (5, 6) atteignent l'extrémité de finition d'assemblage, puis les outils peuvent traverser l'extrémité de finition d'assemblage pour terminer le soudage par friction-malaxage.

22. Système de laminage à froid comprenant le dispositif de soudage par friction-malaxage sur deux faces selon l'une quelconque des revendications 14 à 21.

34

# FIG. 1

Metal Plate Traveling Direction

# FIG. 2

# FIG. 3

# FIG. 4

# FIG. 5

# FIG. 6

# FIG. 7

# FIG. 8

# FIG. 9

Metal Plate
Traveling Direction

# FIG. 10

Metal Plate
Traveling Direction

Upper Rotational Direction

27a  Upper Shearing
Force

27b  Lower Shearing
Force

Lower Rotational Direction

# FIG. 11

Metal Plate
Traveling Direction

5   13a

16

2

18b

17

1

6   13b

# FIG. 12

18b  Unwelded Surface

F1

F2

F2

F1

F1 : Pressing Forces From Upper And Lower Tools
F2 : Reaction Forces Of Deformation Due To Thermal Expansion
        +
     Reaction Forces Due To Exclusion Force
     During Probe Passing

# FIG. 13

Metal Plate
Traveling Direction

5  13a

1

6

19

2

13b

# FIG. 14

Upper Rotational Direction

Metal Plate
Traveling Direction

5

13a  19

1

RS  AS

27a  Upper Shearing
Force

27b  Lower Shearing
Force

AS  RS

13b

2

6

Lower Rotational Direction

# FIG. 15

# FIG. 16

# FIG. 17

# FIG. 18

# FIG. 19

Central Region Un-Welded Ratio
And Cross-Sectional Modulus Ratio

# FIG. 20

Tool Rotational Direction

5

1

2

Welding Progress Direction

Welding Progress Direction

Tool Rotational Direction

6

# FIG. 21

Upper Rotational Direction

⊗ Welding Progress Direction

Metal Plate Traveling Direction

5

2

27a  Upper Shearing Force

27b  Lower Shearing Force

1

6

Lower Rotational Direction

# FIG. 22

Tool Rotational Direction

5

1

2

Welding Progress
Direction

Welding Progress Direction

Tool Rotational Direction

6

# FIG. 23

Upper Rotational Direction

⊗ Welding Progress Direction

Metal Plate
Traveling Direction

5

2

27a Upper Shearing
Force

27b Lower Shearing
Force

1

6

Lower Rotational Direction

# FIG. 24

Welding Direction

# FIG. 25

14

5

21a  Upper Friction Stir Welding
     Starting Position

Welding Direction

J(1,2)

24

21b  Lower Friction Stir Welding
     Starting Position

6

# FIG. 26

θ1

14

5

21a  Upper Friction Stir Welding
     Starting Position

Welding Direction

J(1,2)

24

21b  Lower Friction Stir Welding
     Starting Position

6

θ2

49

# FIG. 27

20a Upper Rotating Tool
Standby Position

20a Upper Rotating Tool
Standby Position

5

13a

21a Upper Friction
Stir Welding
Starting Position

22a Upper Friction
Stir Welding
Finishing Position

J(1,2)

24

13b

21b Lower Friction
Stir Welding
Starting Position

22b Lower Friction
Stir Welding
Finishing Position

20b Lower Rotating Tool
Standby Position

6

20b Lower Rotating Tool
Standby Position

Both-Surfaces
Position Control Range

One Surface Side:
Position Control Range
Another Surface Side:
Load Control Range

Both-Surfaces
Position
Control Range

(Both-Surfaces Load Control Range)

# FIG. 28

Step S1

Calculate Relative Positions Of Upper And Lower Tools And Plates
(Calculation Is Performed Using Values Measured By Position
Measuring Devices, And Calculated Values Are Used For Position Control)

Step S2

Both Surfaces Position Control
(From Upper And Lower Rotating Tools Standby Position To
Friction Stir Starting Plate Edge Surfaces)

Step S3

One Surface Position Control And
Another Surface Load Control
(From Friction Stir Starting Plate Edge Surfaces
To Friction Stir Finishing Position)

Step S4

Both Surfaces Position Control
(From Friction Stir Finishing Position To
Friction Stir Tool Standby Position)

# FIG. 29

Step S1

Calculate Relative Positions Of Upper And Lower Tools And Plates
(Calculation Is Performed Using Values Measured By Position
Measuring Devices, And Calculated Values Are Used For Position Control)

Step S2

Both Surfaces Position Control
(From Upper And Lower Rotating Tools Standby Position To
Friction Stir Starting Plate Edge Surfaces)

Step S3A

Both Surfaces Load Control
(From Friction Stir Starting Plate Edge Surfaces
To Friction Stir Finishing Positions)

Step S4

Both Surfaces Position Control
(From Friction Stir Finishing Position To
Friction Stir Tool Standby Position)

# FIG. 30

Rotary Tool Inclination Angle
$\theta 1$

5

32

Rotary Tool
Rotational Direction

33

Friction Stir
Progressing Direction

13a

# FIG. 31

# FIG. 32

Friction Stir Tool
Rotational Direction

1

2

5

33

34

32

Friction Stir
Progressing Direction

6

## FIG. 33

Rolling Direction

To Product After Desired Plate
Thickness Is Reached

Circulate Coils And
Repeatedly Roll Coils

## FIG. 34

Rolling Direction

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002103061 A
- JP 2712838 B
- JP 3261433 B
- WO 2008062506 A
- JP 3931119 B

**Non-patent literature cited in the description**

- Friction stir welding - All of Friction stir welding. Sanpo Publications Incorporated, 12-16